# EUROPEAN PATENT APPLICATION

(11) **EP 3 696 951 A1**
(43) Date of publication of application: **19.08.2020**
(21) Application number: 18884214.0
(22) Date of filing: 29.11.2018
(51) Int. Cl.: H02K 3/34, H02K 3/00, H02K 15/10

(54) **ARMATURE AND METHOD FOR MANUFACTURING ARMATURE**

(30) Priority: 30.11.2017 JP 2017231101
(71) Applicant: AISIN AW CO., LTD., Anjo-shi, Aichi 444-1192 (JP)
(72) Inventor: KOGA, Kiyotaka, Anjo-shi Aichi 444-1192 (JP); SUGIHARA, Tomotsugu, Anjo-shi Aichi 444-1192 (JP)
(74) Representative: Kramer Barske Schmidtchen Patentanwälte PartG mbB
(86) International application number: PCT/JP2018/044079
(87) International publication number: WO 2019/107515

(57) **Abstract**

In an armature, a plurality of segment conductors, which are joined to each other at a joint portion, are disposed in parallel in the radial direction. An insulating portion is provided on a conductor surface of one segment conductor at a position in the center axis direction corresponding to an adjacent joint portion of a different segment conductor that is adjacent to the one segment conductor in the radial direction. The insulating portion has a second insulation resistance which is higher than a first insulation resistance of an insulating coating of the different segment conductor.

## Description

### TECHNICAL FIELD

The present invention relates to an armature and a method of manufacturing an armature.

### BACKGROUND ART

There has hitherto been known an armature that includes an armature core provided with a plurality of slots that extend in the center axis direction. Such an armature is disclosed in Japanese Unexamined Patent Application Publication No. 2015-23771 (JP 2015-23771 A), for example.

JP 2015-23771 A discloses a rotary electric machine stator (hereinafter referred to as a "stator") that includes a stator core provided with a plurality of slots that extend in the axial direction. The stator includes a coil constituted by joining the distal end portion of a first-side conductor segment, which is disposed on one axial side of the stator core, and the distal end portion of a second-side conductor segment, which is disposed on the other axial side of the stator core, to each other. The first-side conductor segment and the second-side conductor segment are each constituted from a conductor wire provided with an insulating coating and having a rectangular cross-sectional shape. In addition, the distal end portion of the first-side conductor segment and the distal end portion of the second-side conductor segment are exposed from the insulating coating. In the stator, the distal end portion of the first-side conductor segment and the distal end portion of the second-side conductor segment are joined to each other by heating the first-side conductor segment and the second-side conductor segment while being pressed against each other from both sides in the axial direction with a conductive bonding material in a paste form disposed between the respective exposed distal end portions thereof. In the stator, in addition, a plurality of first-side conductor segments and second-side conductor segments joined to each other are disposed adjacent to each other in the radial direction in each slot.

### Related Art Documents

### Patent Documents

Patent Document 1: Japanese Unexamined Patent Application Publication No. 2015-23771 (JP 2015-23771 A)

### SUMMARY OF THE INVENTION

### Problem to be Solved by the Invention

In the stator described in JP 2015-23771 A, however, the distal end portion of the first-side conductor segment and the distal end portion of the second-side conductor segment (conductor portions) are exposed from the insulating coating. Therefore, the insulation performance between a joint portion between the distal end portion of a first-side conductor segment and the distal end portion of a second-side conductor segment and a conductor segment (a first-side conductor segment or a second-side conductor segment) disposed adjacent to the joint portion may be lowered.

The present invention has been made in view of addressing the foregoing issue, and therefore has an object to provide an armature and a method of manufacturing an armature that enable securing the insulation performance between a joint portion and an adjacent segment conductor in the case where segment conductors are to be joined to each other.

### Means for Solving the Problem

In order to achieve the foregoing object, a first aspect of the present invention provides an armature including: an armature core provided with a plurality of slots that extend in a center axis direction; and a coil portion in which a plurality of segment conductors are joined to each other at a joint portion, in which: sets of the plurality of segment conductors, which are joined to each other at the joint portion, are disposed in parallel in a radial direction of the armature core; and an insulating portion is provided on a conductor surface of one segment conductor, among the plurality of segment conductors which are disposed in parallel in the radial direction, at a position in the center axis direction corresponding to an adjacent joint portion which is the joint portion of a different segment conductor disposed adjacent to the one segment conductor in the radial direction, the insulating portion having a second insulation resistance which is higher than a first insulation resistance of an insulating coating of the different segment conductor. The term "insulating portion" as used herein is used to mean a wide concept including not only a member that is integral with the insulating coating but also a separate member superposed on the insulating coating.

In the armature according to the first aspect of the present invention, as described above, an insulating portion is provided on a conductor surface of one segment conductor at a position in the center axis direction corresponding to an adjacent joint portion, and the insulating portion has a second insulation resistance which is higher than a first insulation resistance of an insulating coating of a different segment conductor. Consequently, the insulation resistance of the insulating portion of the one segment conductor at a position adjacent to the adjacent joint portion can be made relatively high, and thus the insulation performance between the adjacent joint portion and the segment conductor which is adjacent to the adjacent joint portion can be improved. As a result, the insulation performance between the adjacent joint portion and the adjacent segment conductor can be secured in the case where the segment conductors are to be joined to each other, even in the case where the conductor of the adjacent joint portion is exposed.

A second aspect of the present invention provides a method of manufacturing an armature that includes an armature core provided with a plurality of slots that extend in a center axis direction and a coil portion in which respective distal end portions of a plurality of segment conductors are joined to each other, the method including: a step of providing an insulating portion, which has a second insulation resistance which is higher than a first insulation resistance of an insulating coating on the distal end portions, on a conductor surface of a portion of the segment conductors that is different from the distal end portions; a step of disposing the plurality of segment conductors in the armature core, after the step of providing the insulating portion, such that the plurality of segment conductors are arranged in parallel in a radial direction of the armature core and the insulating portion of one segment conductor, among the plurality of segment conductors which are disposed in parallel in the radial direction, is positioned at a position in the center axis direction corresponding to the distal end portion of a different segment conductor disposed adjacent to the one segment conductor in the radial direction; and a step of joining the respective distal end portions of the plurality of segment conductors, which face each other in the center axis direction, to each other after the step of disposing the plurality of segment conductors.

In the method of manufacturing an armature according to the second aspect of the present invention, the insulating portion is provided on the segment conductors, and the plurality of segment conductors are disposed in the armature core such that the insulating portion of one segment conductor is positioned at a position in the center axis direction corresponding to the distal end portion of a different segment conductor disposed adjacent to the one segment conductor in the radial direction. Consequently, it is possible to provide a method of manufacturing an armature that enables securing the insulation performance between an adjacent joint portion and a segment conductor that is adjacent to the adjacent joint portion in the case where the segment conductors are to be joined to each other.

### Effects of the Invention

According to the present invention, as described above, the insulation performance between a joint portion and an adjacent segment conductor can be secured in the case where segment conductors are to be joined to each other.

### BRIEF DESCRIPTION OF THE DRAWINGS

[FIG. 1] FIG. 1 is a plan view illustrating the configuration of a stator (rotary electric machine) according to an embodiment.
[FIG. 2] FIG. 2 is a perspective view illustrating the configuration of the stator according to the embodiment.
[FIG. 3] FIG. 3 is an exploded perspective view of the stator according to the embodiment.
[FIG. 4] FIG. 4 is a plan view illustrating the configuration of a stator core according to the embodiment.
[FIG. 5] FIG. 5 is a sectional view illustrating the configuration of slot insulating paper according to the embodiment.
[FIG. 6] FIG. 6 is a circuit diagram illustrating the connection configuration of a coil portion according to the embodiment.
[FIG. 7] FIG. 7 is a perspective view illustrating a part of a first coil assembly according to the embodiment.
[FIG. 8] FIG. 8 is a cross-sectional view illustrating the configuration of a segment conductor according to the embodiment, in which FIG. 8A illustrates an insulating coating and FIG. 8B illustrates an insulating portion.
[FIG. 9] FIG. 9 illustrates the configuration of a general conductor according to the embodiment.
[FIG. 10] FIG. 10 illustrates the configuration of a power conductor according to the embodiment.
[FIG. 11] FIG. 11 is an enlarged view of a portion indicated by symbol E1 in FIG. 1.
[FIG. 12] FIG. 12 is a sectional view taken along the line 1000-1000 in FIG. 1.
[FIG. 13] FIG. 13 is a perspective view illustrating the configuration of a radially outer neutral point conductor according to the embodiment.
[FIG. 14] FIG. 14 is an enlarged view of a portion indicated by symbol E2 in FIG. 1.
[FIG. 15] FIG. 15 is a perspective view illustrating the configuration of a radially inner neutral point conductor according to the embodiment.
[FIG. 16] FIG. 16 is a sectional view illustrating the configuration of a first facing surface and a second facing surface according to the embodiment.
[FIG. 17] FIG. 17 is a sectional view illustrating the position of arrangement of insulating members and joint portions according to the embodiment.
[FIG. 18] FIG. 18 is a schematic view illustrating the areas of a first joint surface and a first inverse inclination surface and the areas of a second joint surface and a second inverse inclination surface according to the embodiment.
[FIG. 19] FIG. 19 is a flowchart illustrating steps of manufacturing the stator according to the embodiment.
[FIG. 20] FIG. 20 illustrates a step of disposing segment conductors in a slot according to the embodiment.
[FIG. 21] FIG. 21 is a sectional view illustrating a step of disposing slot insulating paper in slots according to the embodiment.
[FIG. 22] FIG. 22 is a sectional view, taken along the radial direction, illustrating a step of pressing segment conductors with a pressing jig and a wall portion according to the embodiment.
[FIG. 23] FIG. 23 is a sectional view, as seen in plan, illustrating the step of pressing the segment conductors with the pressing jig and the wall portion according to the embodiment.
[FIG. 24] FIG. 24 illustrates the configuration of a stator according to a first modification of the embodiment.
[FIG. 25] FIG. 25 illustrates the configuration of a stator according to a second modification of the embodiment.
[FIG. 26] FIG. 26 illustrates the configuration of a stator according to a third modification of the embodiment.
[FIG. 27] FIG. 27 illustrates the configuration of a stator according to a fourth modification of the embodiment.
[FIG. 28] FIG. 28 illustrates the configuration of a stator according to a fifth modification of the embodiment.

### MODES FOR CARRYING OUT THE INVENTION

An embodiment of the present invention will be described below with reference to the drawings.

### [Structure of Stator]

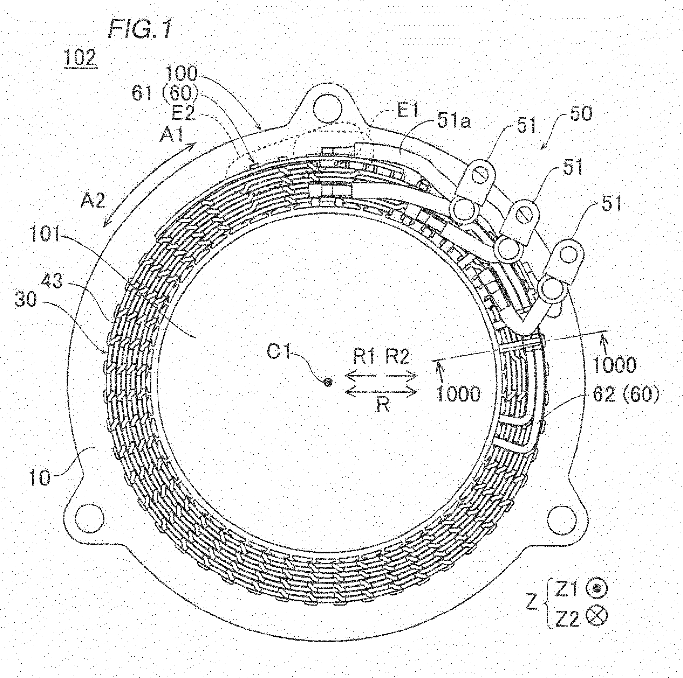

The structure of a stator 100 according to the present embodiment will be described with reference to FIGS. 1 to 16. The stator 100 has a circular ring shape centered on a center axis C1. The stator 100 is an example of the "armature" in the claims.

The term "axial direction (center axis direction)" as used herein means the direction (Z direction) along the center axis C1 (rotational axis of a rotor 101) of the stator 100 as illustrated in FIG. 1. The term "circumferential direction" means the circumferential direction (A direction) of the stator 100. The term "radial direction" means the radial direction (R direction) of the stator 100. The term "radially inner side" means the direction (R1 direction) toward the center axis C1 of the stator 100. The term "radially outer side" means the direction (R2 direction) toward the outside of the stator 100.

The stator 100 constitutes a part of a rotary electric machine together with the rotor 101. The rotary electric machine is constituted as a motor, a generator, or a motor/generator, for example. As illustrated in FIG. 1, the stator 100 is disposed on the radially outer side of the rotor 101 which is provided with permanent magnets (not illustrated). That is, in the present embodiment, the stator 100 constitutes a part of a rotary electric machine 102 of an inner rotor type.

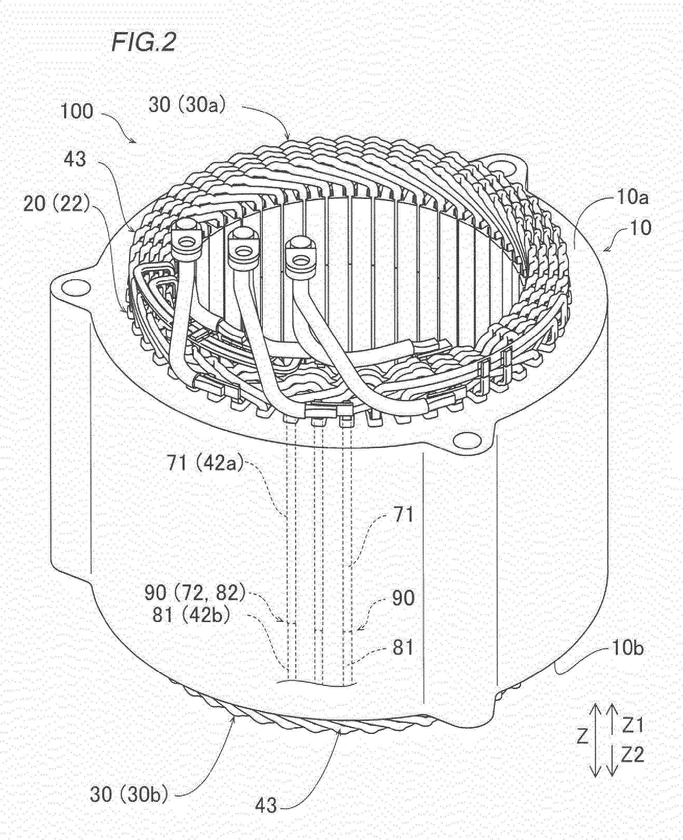

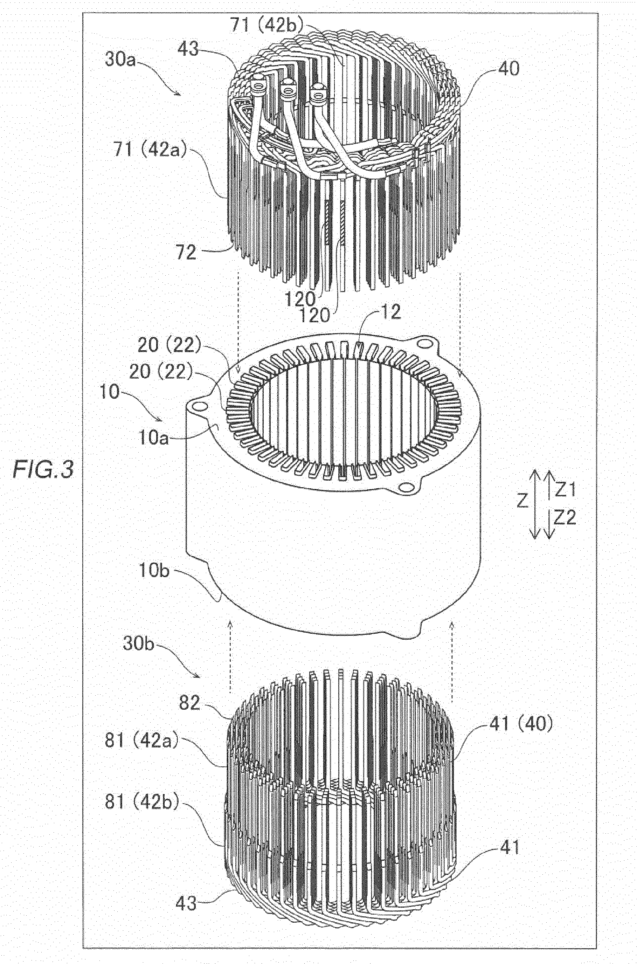

As illustrated in FIG. 2, the stator 100 includes a stator core 10, slot insulating paper 20, and a coil portion 30. As illustrated in FIG. 3, in addition, the coil portion 30 includes a first coil assembly 30a and a second coil assembly 30b. In addition, the coil portion 30 is composed of a plurality of segment conductors 40. The stator core 10 is an example of the "armature core" in the claims. In addition, the slot insulating paper 20 is an example of the "slot insulating member" in the claims.

### (Structure of Stator Core)

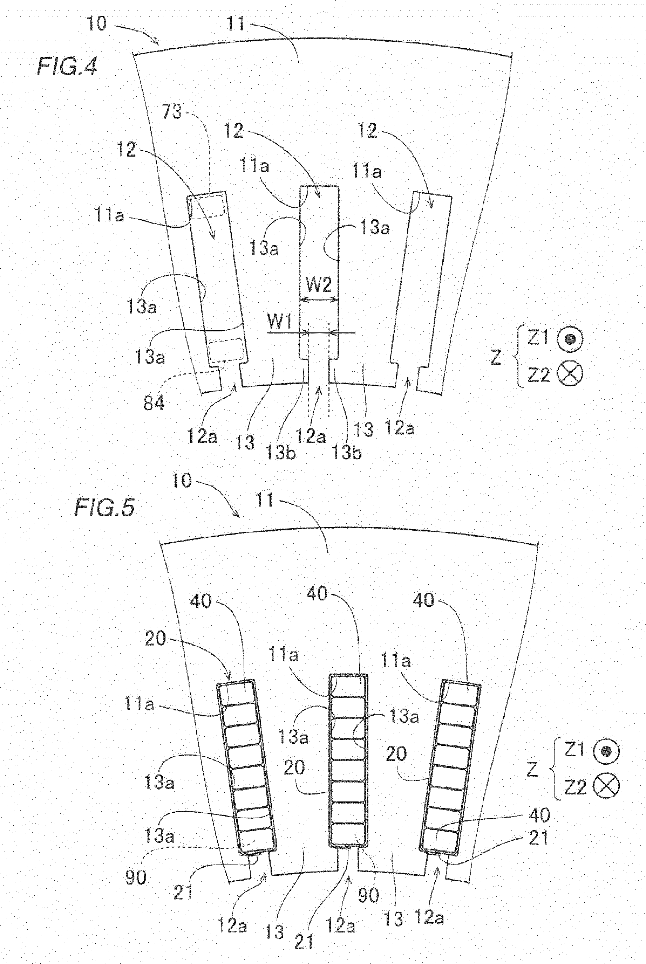

The stator core 10 has a cylindrical shape centered on the center axis C1 (see FIG. 1). In addition, the stator core 10 is formed by stacking a plurality of electromagnetic steel sheets (e.g. silicon steel sheets) in the axial direction, for example. As illustrated in FIG. 4, the stator core 10 is provided with a back yoke 11 in a circular ring shape as seen in the axial direction and a plurality of slots 12 provided on the radially inner side of the back yoke 11 to extend in the axial direction. The stator core 10 includes a plurality of teeth 13 provided on both sides of the slots 12 in the circumferential direction.

The slots 12 are each a portion surrounded by a wall portion 11a of the back yoke 11 provided on the radially outer side with respect to a first other end surface 73, to be discussed later, and respective circumferential side surfaces 13a of two teeth 13. The slots 12 are each provided with an opening portion 12a provided on the radially inner side with respect to a second one end surface 84, to be discussed later, to open on the radially inner side. In addition, the slots 12 open on both sides in the axial direction. The teeth 13 are formed so as to project toward the radially inner side from the back yoke 11, and each have a projecting portion 13b formed at the distal end portion thereof on the radially inner side to constitute the opening portions 12a of the slots 12.

The opening portion 12a has an opening width W1 in the circumferential direction. Here, the opening width W1 corresponds to the distance between the respective distal end portions of the projecting portions of the projecting portions 13b of the teeth 13. Meanwhile, a width W2 of a portion of the slot 12 in which the coil portion 30 and the slot insulating paper 20 are disposed is larger than the opening width W1. That is, the slots 12 are constituted as semi-open slots. Here, the width W2 corresponds to the distance between the respective circumferential side surfaces 13a of the teeth 13 which are disposed on both sides of the slot 12. In addition, the width W2 of the slots 12 is generally constant over the radial direction.

### (Structure of Slot Insulating Paper)

As illustrated in FIG. 5, the slot insulating paper 20 is disposed between the teeth 13 and the segment conductors 40. Here, in the present embodiment, the slot insulating paper 20 includes a joint portion cover portion 21. The joint portion cover portion 21 is configured to cover at least the radially inner side of a joint portion 90, to be discussed later, of the segment conductor 40 disposed closest to the opening portion 12a of the slot 12, among the plurality of segment conductors 40 which are disposed in parallel in the radial direction. The joint portion is an example of the "distal end portion" in the claims.

Particularly, the slot insulating paper 20 is constituted of an insulating member in a sheet shape such as aramid paper and a polymer film, for example, and has a function of securing the insulation between the segment conductors 40 (coil portion 30) and the stator core 10. The slot insulating paper 20 is disposed between the segment conductors 40 and the circumferential side surfaces 13a of the teeth 13 and between the segment conductor 40 disposed on the radially outermost side, among the plurality of segment conductors 40, and the wall portion 11a. In addition, as illustrated in FIG. 3, the slot insulating paper 20 includes collar portions 22 (cuff portions) that project axially outward from the slot 12 on both sides in the axial direction and that are folded back to be formed.

The slot insulating paper 20 is disposed so as to integrally cover the periphery of the plurality of segment conductors 40 which are disposed in parallel in the radial direction as seen in the direction of the arrow Z2. In other words, the slot insulating paper 20 covers both sides, in the circumferential direction, and both sides, in the radial direction, of slot housed portions 42a and 42b, to be discussed later, of the plurality of segment conductors 40 which are disposed in parallel in the radial direction. Consequently, the slot insulating paper 20 can secure the insulation between the joint portion 90 and the stator core 10. The slot housed portions 42a and 42b are an example of the "leg portions" in the claims.

### (Structure of Coil Portion)

As illustrated in FIGS. 2 and 3, the coil portion 30 is formed by combining, in the axial direction, and joining the first coil assembly 30a, which is provided on one axial side (side in the direction of the arrow Z1), and the second coil assembly 30b, which is provided on the other axial side (side in the direction of the arrow Z2). The first coil assembly 30a and the second coil assembly 30b are each formed in a circular ring shape about the center axis C1 (see FIG. 1) as with the stator core 10.

The coil portion 30 is constituted as a wave-wound coil, for example. In addition, the coil portion 30 is constituted as an eight-turn coil, for example. That is, as illustrated in FIG. 5, the coil portion 30 is constituted with eight segment conductors 40 disposed in parallel in the radial direction in each slot 12. The coil portion 30 is supplied with three-phase AC power from a power source portion (not illustrated) so as to generate magnetic flux with a current flowing one way and the other in the axial direction and with a current flowing in the circumferential direction.

### <Configuration of Connection of Coil Portion>

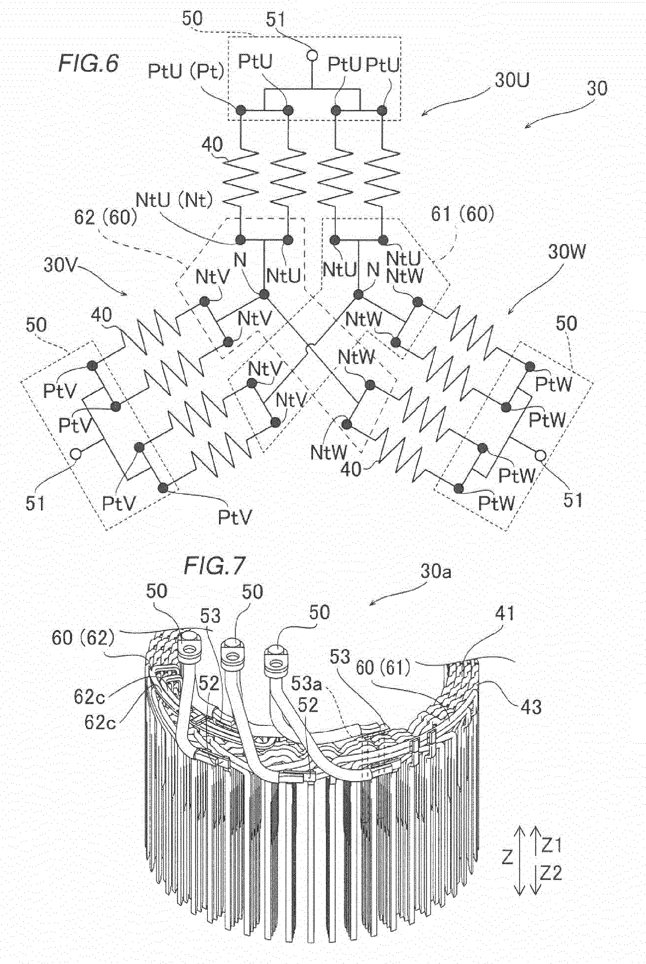

As illustrated in FIG. 6, the coil portion 30 is connected through a Y connection of three phases. That is, the coil portion 30 includes a U-phase coil portion 30U, a V-phase coil portion 30V, and a W-phase coil portion 30W. For example, the coil portion 30 is provided with a plurality of neutral points N. Particularly, the coil portion 30 is connected through a four-parallel connection (star connection). That is, the U-phase coil portion 30U is provided with four neutral point connection end portions NtU and four power line connection end portions PtU. The V-phase coil portion 30V is provided with four neutral point connection end portions NtV and four power line connection end portions PtV The W-phase coil portion 30W is provided with four neutral point connection end portions NtW and four power line connection end portions PtW. In the following description, the neutral point connection end portions and the power line connection end portions will be referred to simply as "neutral point connection end portions Nt" and "power line connection end portions Pt" in the case where U-phase, V-phase, and W-phase are not specifically differentiated from each other.

### <Structure of Coil Assembly>

As illustrated in FIG. 7, the first coil assembly 30a includes: a plurality of (e.g. three) power line connection segment conductors 50 (hereinafter referred to as "power conductors 50") that serve as the segment conductors 40; a plurality of (e.g. two) neutral point connection segment conductors 60 (hereinafter referred to as "neutral point conductors 60") that serve as the segment conductors 40; and a plurality of general conductors 41 that are conductors (general segment conductors 40) that are different from the power conductors 50 and the neutral point conductors 60, among the plurality of segment conductors 40, and that constitute the coil portion 30.

As illustrated in FIG. 3, the second coil assembly 30b is constituted from a plurality of general conductors 41. Preferably, the second coil assembly 30b is constituted from only the plurality of general conductors 41, and all the power conductors 50 and the neutral point conductors 60 provided in the stator 100 are provided in the first coil assembly 30a.

### (Structure of Segment Conductors)

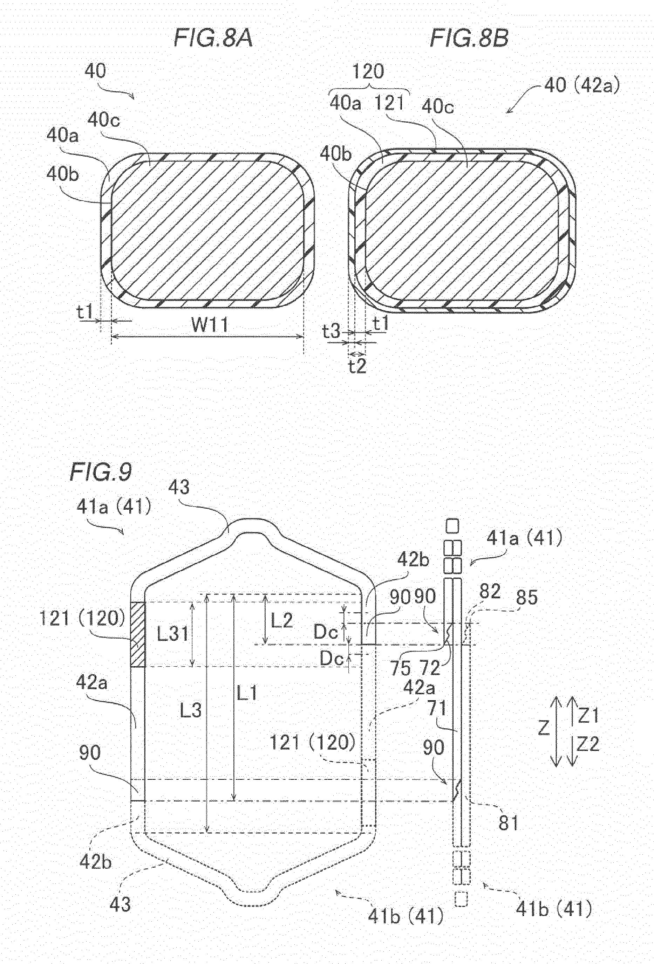

As illustrated in FIG. 8A, the segment conductor 40 is constituted as a rectangular conductive wire which has a generally rectangular cross-sectional surface. An insulating coating 40a which has a thickness t1 is provided on a conductor surface 40b of the segment conductor 40. The thickness t1 of the insulating coating 40a is set to such a level that enables securing the insulation performance between different phases (insulation between coil end portions 43), for example. The insulating coating 40a has an insulation resistance r1. Particularly, the insulating coating 40a is constituted of a coating agent such as polyimide. Meanwhile, a conductor body 40c of the segment conductor 40 is constituted of a metal material (conductive material) such as copper or aluminum, for example. While FIG. 8 illustrates components with size relationship such as thickness thereof exaggerated for illustration, the present invention is not limited thereto.

As illustrated in FIG. 2, the segment conductor 40 includes the slot housed portions 42a and 42b to be disposed in the slots 12 and the coil end portion 43. The slot housed portions 42a and 42b mean portions to be disposed in the slots 12 from the axial position of an end surface 10a or 10b of the stator core 10. The coil end portion 43 means a portion formed to be continuous with the slot housed portions 42a and 42b and disposed on the axially outer side with respect to the end surface 10a or 10b of the stator core 10. In addition, the coil end portion 43 has an offset portion shaped to be bent in the axial direction and offset in the radial direction at the bent portion.

### <Structure of General Conductors>

As illustrated in FIG. 9, the general conductor 41 includes a pair of slot housed portions 42a and 42b to be disposed in different slots 12 and a coil end portion 43 that connects between the pair of slot housed portions 42a and 42b. Consequently, the general conductor 41 has a generally U-shape or a generally J-shape as seen from the radially inner side. The slot housed portions 42a and 42b are formed to be straight along the axial direction. The slot housed portions 42a and 42b of the power conductors 50 and the slot housed portions 42a and 42b of the neutral point conductors 60 are configured similarly to the slot housed portions 42a and 42b of the general conductors 41, and therefore are not described.

Here, the coil pitch of the general conductor 41 is six. That is, the pair of slot housed portions 42a and 42b are disposed at positions six slots 12 away from each other in the circumferential direction. That is, five slots are provided between the slot 12 in which the slot housed portion 42a of the general conductor 41 is disposed and the slot 12 in which the slot housed portion 42b is disposed.

In the present embodiment, in addition, the pair of slot housed portions 42a and 42b have different axial lengths. Specifically, an axial length L1 of the slot housed portion 42a is longer than an axial length L2 of the slot housed portion 42b. The axial length L1 (L2) of the slot housed portion 42a (42b) means the length from a distal end 75 (85) to the axial position corresponding to the axial end surface 10a (10b) of the stator core 10. In addition, the axial lengths L1 and L2 are smaller than an axial length L3 of the stator core 10. The axial length L3 of the stator core 10 means the distance (interval) between the axial end surfaces 10a and 10b. For example, the axial length L1 is longer than half the axial length L3, and the axial length L2 is shorter than half the axial length L3.

In addition, the plurality of general conductors 41 include first general conductors 41a disposed on one axial side (side in the direction of the arrow Z1) with respect to the stator core 10 and included in the first coil assembly 30a, and second general conductors 41b disposed on the other axial side (side in the direction of the arrow Z2) with respect to the stator core 10 and included in the second coil assembly 30b.

### <Structure of Power Conductors>

In the power conductor 50, as illustrated in FIG. 6, a plurality of (e.g. four) power line connection end portions Pt for the same phase are electrically connected to each other, and the plurality of power line connection end portions Pt which are connected to each other and a power terminal member 51 are electrically connected to each other. The power conductors 50 have a function of introducing power from a power source portion (not illustrated) to the coil portion 30.

Particularly, as illustrated in FIG. 7, the power conductor 50 includes a radially outer power conductor 52 to be disposed on the axially outer side of the stator core 10 and a radially inner power conductor 53 to be disposed on the radially inner side. In other words, the power conductor 50 is formed in a bifurcated shape.

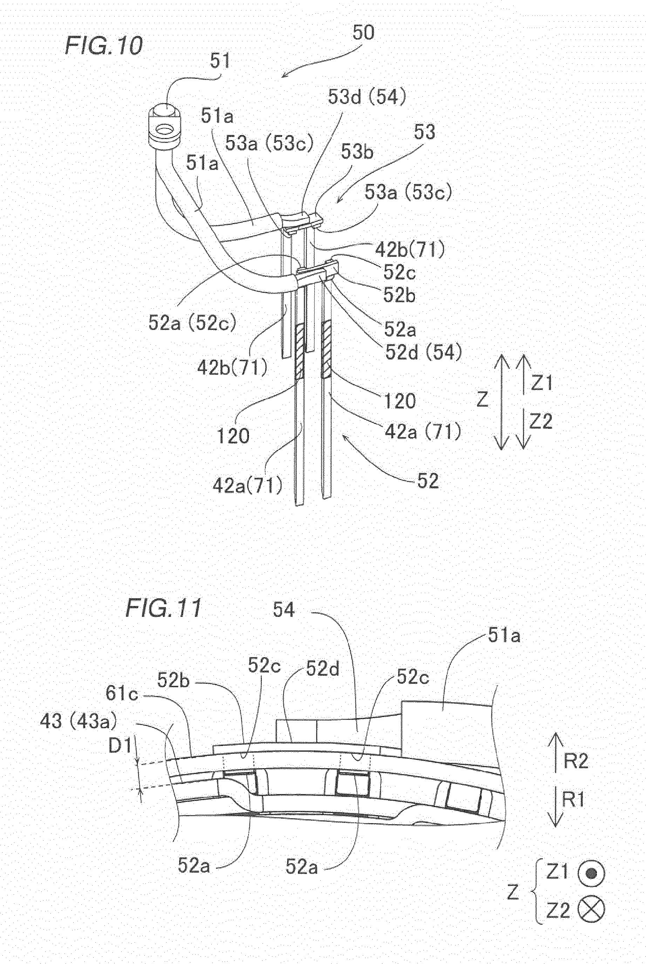

Here, in the present embodiment, as illustrated in FIG. 10, the radially outer power conductor 52 and the power terminal member 51 are electrically connected to each other by a lead wire 54. In addition, the radially inner power conductor 53 and the power terminal member 51 are electrically connected to each other by a lead wire 54. The radially outer power conductor 52 and the radially inner power conductor 53 are electrically connected to each other via the power terminal member 51 and the lead wires 54. In addition, the lead wires 54 are formed from a stranded wire (conductor), for example, with an insulating tube 51a disposed at the outer periphery thereof.

The radially outer power conductor 52 includes two slot housed portions 42a, two power line coil end portions 52a that constitute two power line connection end portions Pt and that are led out from the slot housed portions 42a in the axial direction, and a conductor plate 52b joined to the two power line coil end portions 52a to be electrically connected thereto. For example, the conductor plate 52b is joined to the radially outer side of the two power line coil end portions 52a, and the lead wire 54 is joined to the radially outer side of the conductor plate 52b.

The two power line coil end portions 52a and the conductor plate 52b are connected to each other by being welded at welded portions 52c. In addition, the conductor plate 52b and the lead wire 54 are connected to each other by being brazed or welded at a joint portion 52d. For example, the welding is implemented through any of resistance welding, arc welding, laser welding, and high-energy beam welding.

Here, as illustrated in FIG. 11, a spacing D1 in the radial direction between the welded portion 52c and the joint portion 52d (conductor plate 52b) and an end surface 43a, on the radially outer side, of the coil end portion 43 of the general conductor 41 is equal to or less than twice a width W11 of the cross-sectional surface (see FIG. 8) of the segment conductor 40 (preferably equal to or less than the width W11). For example, no welding tool space is provided between the welded portion 52c and the joint portion 52d and the coil end portion 43.

As illustrated in FIG. 10, the radially inner power conductor 53 includes two slot housed portions 42b, two power line coil end portions 53a that constitute two power line connection end portions Pt and that are led out from the slot housed portions 42b in the axial direction, and a conductor plate 53b joined to the two power line coil end portions 53a to be electrically connected thereto. For example, the conductor plate 53b is joined to the axially outer side (side in the direction of the arrow Z1) of the two power line coil end portions 53a, and the lead wire 54 is joined to the axially outer side (side in the direction of the arrow Z1) of the conductor plate 53b.

The two power line coil end portions 53a and the conductor plate 53b are connected to each other by being welded at joint portions 53c. In addition, the conductor plate 53b and the lead wire 54 are connected to each other by being welded at a welded portion 53d. Here, a spacing D2 in the axial direction between the joint portion 53c and the welded portion 53d (conductor plate 53b) and an end surface 43b, on one axial side, of the coil end portion 43 of the general conductor 41 is equal to or less than twice the width W11 of the cross-sectional surface (see FIG. 8) of the segment conductor 40 (preferably equal to or less than the width W11).

The slot pitch of the radially outer power conductor 52 is one for a portion formed from the slot housed portions 42a and the conductor plate 52b, and zero if only the slot housed portions 42a are considered as the segment conductors 40. Meanwhile, the slot pitch of the radially inner power conductor 53 is one for a portion formed from the slot housed portions 42b and the conductor plate 53b, and zero if only the slot housed portions 42b are considered as the segment conductors 40. That is, the slot pitch of the power conductor 50 is different from the slot pitch (6) of the general conductor 41.

### <Structure of Neutral Point Conductors>

As illustrated in FIG. 7, the neutral point conductors 60 include a radially outer neutral point conductor 61 and a radially inner neutral point conductor 62. As illustrated in FIG. 6, the radially outer neutral point conductor 61 and the radially inner neutral point conductor 62 each include a neutral point N, at which the neutral point connection end portions NtU of the U-phase coil portion 30U, the neutral point connection end portions NtV of the V-phase coil portion 30V, and the neutral point connection end portions NtW of the W-phase coil portion 30W are electrically connected to each other.

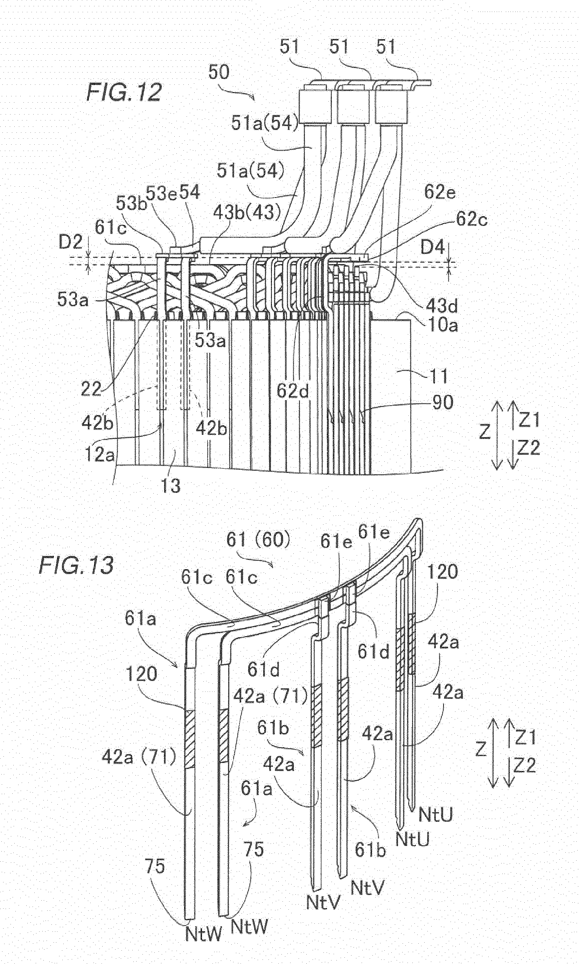

As illustrated in FIG. 13, the radially outer neutral point conductor 61 includes two U-phase/W-phase neutral point segment conductors 61a and two V-phase neutral point segment conductors 61b. The U-phase/W-phase neutral point segment conductors 61a each include a slot housed portion 42a for U-phase to be connected to the general conductor 41 for U-phase of three-phase AC, a slot housed portion 42a for W-phase to be connected to the general conductor 41 for W-phase, and two neutral point coil end portions 61c that each connect between the slot housed portion 42a for U-phase and the slot housed portion 42a for W-phase. The neutral point coil end portions 61c are each formed to be continuous with the slot housed portion 42a for U-phase, and formed to be continuous with the slot housed portion 42a for W-phase.

The U-phase/W-phase neutral point segment conductors 61a are each formed in a generally U-shape (generally C-shape) as seen from the radially inner side. The V-phase neutral point segment conductors 61b are each formed in a generally straight shape as seen from the radially inner side.

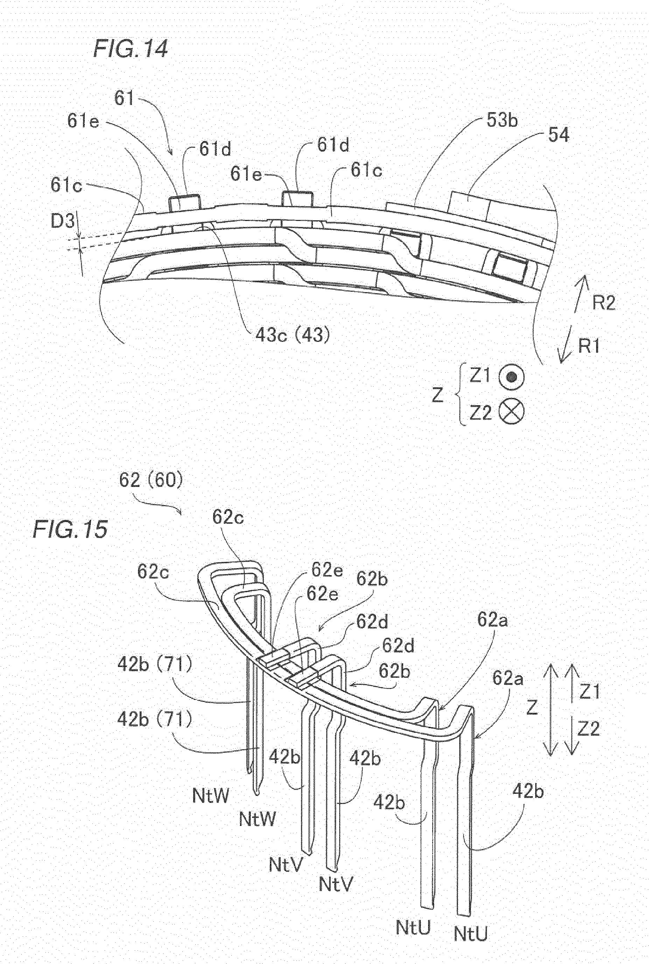

As illustrated in FIG. 14, the neutral point coil end portions 61c are formed along the circumferential direction on the radially outer side of the coil end portion 43 of the general conductor 41. The neutral point coil end portions 61c are formed in a generally arcuate shape as seen in the direction of the arrow Z2.

In addition, the slot pitch of one of the two U-phase/W-phase neutral point segment conductors 61a is nine. Meanwhile, the slot pitch of the other of the two U-phase/W-phase neutral point segment conductors 61a is seven. That is, the U-phase/W-phase neutral point segment conductors 61a have a slot pitch that is different from the slot pitch (6) of the general conductor 41. One of the two U-phase/W-phase neutral point segment conductors 61a is disposed on the axially outer side (side in the direction of the arrow Z1) of the other.

As illustrated in FIG. 13, the V-phase neutral point segment conductors 61b each include a slot housed portion 42a for V-phase to be connected to the general conductor 41 for V-phase and a neutral point coil end portion 61d. The neutral point coil end portion 61d is formed so as to project toward the axially outer side (in the direction of the arrow Z1) from the slot housed portion 42a. Each of the two neutral point coil end portions 61d is joined to the two neutral point coil end portions 61c to be electrically joined thereto.

Specifically, as illustrated in FIG. 14, the two neutral point coil end portions 61d are welded at welded portions 61e to the radially outer side of the two neutral point coil end portions 61c in an arcuate shape. Consequently, in the radially outer neutral point conductor 61, the neutral point connection end portions NtU of the U-phase coil portion 30U, the neutral point connection end portions NtV of the V-phase coil portion 30V, and the neutral point connection end portions NtW of the W-phase coil portion 30W are electrically connected to each other. A spacing D3 between the welded portions 61e (an end surface of the neutral point coil end portions 61c on the radially inner side) and an end surface 43c, on the radially outer side, of the coil end portion 43 of the general conductor 41 is equal to or less than twice the width W11, along the radial direction, of the cross-sectional surface of the segment conductor 40 (preferably equal to or less than the width W11).

As illustrated in FIG. 15, the radially inner neutral point conductor 62 includes two U-phase/W-phase neutral point segment conductors 62a and two V-phase neutral point segment conductors 62b. The U-phase/W-phase neutral point segment conductors 62a each include a slot housed portion 42b for U-phase to be connected to the general conductor 41 for U-phase of three-phase AC, a slot housed portion 42b for W-phase to be connected to the general conductor 41 for W-phase, and a neutral point coil end portion 62c that connects between the slot housed portion 42b for U-phase and the slot housed portion 42b for W-phase. The neutral point coil end portions 62c are each formed to be continuous with the slot housed portion 42b for U-phase, and formed to be continuous with the slot housed portion 42b for W-phase.

The U-phase/W-phase neutral point segment conductors 62a are each formed in a generally U-shape (generally C-shape) as seen from the radially inner side. The V-phase neutral point segment conductors 62b are each formed in a generally straight shape as seen from the radially inner side.

As illustrated in FIG. 7, the neutral point coil end portions 62c are formed on the radially inner side of the coil end portion 43 of the general conductor 41 to project toward the axially outer side with respect to the coil end portion 43 of the general conductor 41. The neutral point coil end portions 62c are disposed in proximity to the axially outer side of the coil end portion 43 of the general conductor 41, and formed along the circumferential direction as seen in the axial direction.

In addition, the slot pitch of one of the two U-phase/W-phase neutral point segment conductors 62a is nine. Meanwhile, the slot pitch of the other of the two U-phase/W-phase neutral point segment conductors 62a is seven. That is, the U-phase/W-phase neutral point segment conductors 62a have a slot pitch that is different from the slot pitch (6) of the general conductor 41. One of the two U-phase/W-phase neutral point segment conductors 62a is disposed on the radially outer side of the other.

The V-phase neutral point segment conductors 62b each include a slot housed portion 42b for V-phase to be connected to the general conductor 41 for V-phase and a neutral point coil end portion 62d. The neutral point coil end portion 62d is formed so as to project toward the axially outer side (in the direction of the arrow Z1) from the slot housed portion 42b. Each of the two neutral point coil end portions 62d is joined to the two neutral point coil end portions 62c to be electrically joined thereto.

Specifically, as illustrated in FIG. 15, the two neutral point coil end portions 62d are welded at welded portions 62e to the axially outer side of the two neutral point coil end portions 62c in an arcuate shape. Consequently, in the radially inner neutral point conductor 62, the neutral point connection end portions NtU of the U-phase coil portion 30U, the neutral point connection end portions NtV of the V-phase coil portion 30V, and the neutral point connection end portions NtW of the W-phase coil portion 30W are electrically connected to each other. As illustrated in FIG. 12, a spacing D4 between the welded portions 62e (an end surface of the neutral point coil end portions 62d on the axially inner side) and an end surface 43d, on the axially outer side, of the coil end portion 43 of the general conductor 41 is equal to or less than twice the width W11, along the radial direction, of the cross-sectional surface of the segment conductor 40 (preferably equal to or less than the width W11).

### (Configuration of Joint Portions)

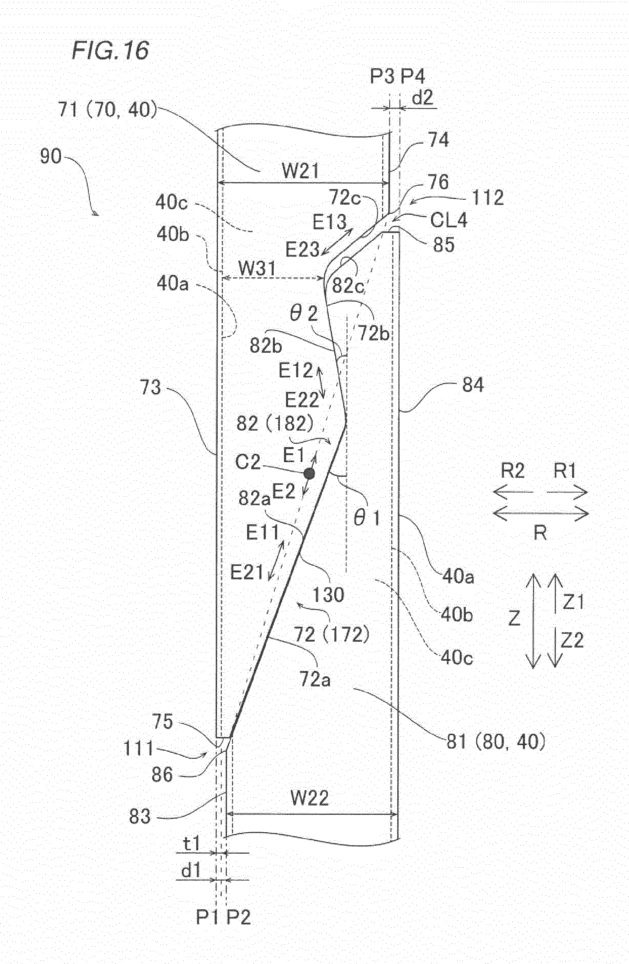

Here, in the present embodiment, as illustrated in FIG. 16, a first slot housed portion 71 which is the slot housed portion 42a or 42b of a first segment conductor 70 which is the segment conductor 40 which constitutes the first coil assembly 30a, among the plurality of segment conductors 40, and a second slot housed portion 81 which is the slot housed portion 42a or 42b of a second segment conductor 80 which is the segment conductor 40 which constitutes the second coil assembly 30b and which faces the first segment conductor 70 in the axial direction are joined to each other at the joint portion 90 in the slot 12 of the stator core 10.

The first slot housed portion 71 includes a first facing surface 72 that directs to the radially inner side (side in the direction of the arrow R1) and that faces the second slot housed portion 81 and a first other end surface 73 that faces the radially outer side (side in the direction of the arrow R2). Meanwhile, the second slot housed portion 81 includes a second facing surface 82 that directs to the radially outer side and that faces the first facing surface 72 and a second other end surface 83 that directs to the radially outer side and that is continuous with the second facing surface 82. At least a part of the first facing surface 72 and at least a part of the second facing surface 82 are joined to each other, and the first other end surface 73 is disposed so as to project toward the radially outer side with respect to the second other end surface 83.

In addition, the first slot housed portion 71 includes a first one end surface 74 that is provided on the opposite side, in the radial direction, of the first other end surface 73 and that is continuous with the first facing surface 72. The second slot housed portion 81 includes a second one end surface 84 that is provided on the opposite side, in the radial direction, of the second other end surface 83 and that directs to the radially inner side. The second one end surface 84 is disposed so as to project toward the radially inner side with respect to the first one end surface 74.

Here, the joint portion 90 is a portion of the coil portion 30 illustrated in FIG. 16, includes the first facing surface 72 and the second facing surface 82, and includes a portion of the first slot housed portion 71 from the distal end 75 to a boundary point 76 between the first facing surface 72 and the first one end surface 74 and a portion of the second slot housed portion 81 from the distal end 85 to a boundary point 86 between the second facing surface 82 and the second other end surface 83.

In the present embodiment, a second stepped portion 111 is formed between the distal end 75 of the first slot housed portion 71 and the boundary point 86 of the second slot housed portion 81, which is the boundary portion between the first other end surface 73 and the second other end surface 83. Meanwhile, a first stepped portion 112 is formed between the boundary point 76 of the first slot housed portion 71 and the distal end 85 of the second slot housed portion 81, which is the boundary portion between the first one end surface 74 and the second one end surface 84. Specifically, in the second stepped portion 111 a step is formed to be dented inward of the segment conductor 40 from the first other end surface 73 toward the second other end surface 83. Meanwhile, in the first stepped portion 112 a step is formed to be dented inward of the segment conductor 40 from the second one end surface 84 toward the first one end surface 74.

In addition, a first deviation width d1 which is the width of the deviation between a radial position P1 of the first other end surface 73 and a radial position P2 of the second other end surface 83 is larger than the thickness t1 of the insulating coating 40a of the segment conductor 40, for example. The first deviation width d1 corresponds to the height of the step of the second stepped portion 111.

Particularly, the first deviation width d1 is set to such a level that the segment conductor 40 is not pressed in the direction of moving the first facing surface 72 and the second facing surface 82 away from each other, or to such a level that a pressing force is reduced when the first slot housed portion 71 or the second slot housed portion 81 is pressed by a pressing jig 200, to be discussed later, and the wall portion 11a, even in the case where the first slot housed portion 71 or the second slot housed portion 81 is elastically deformed.

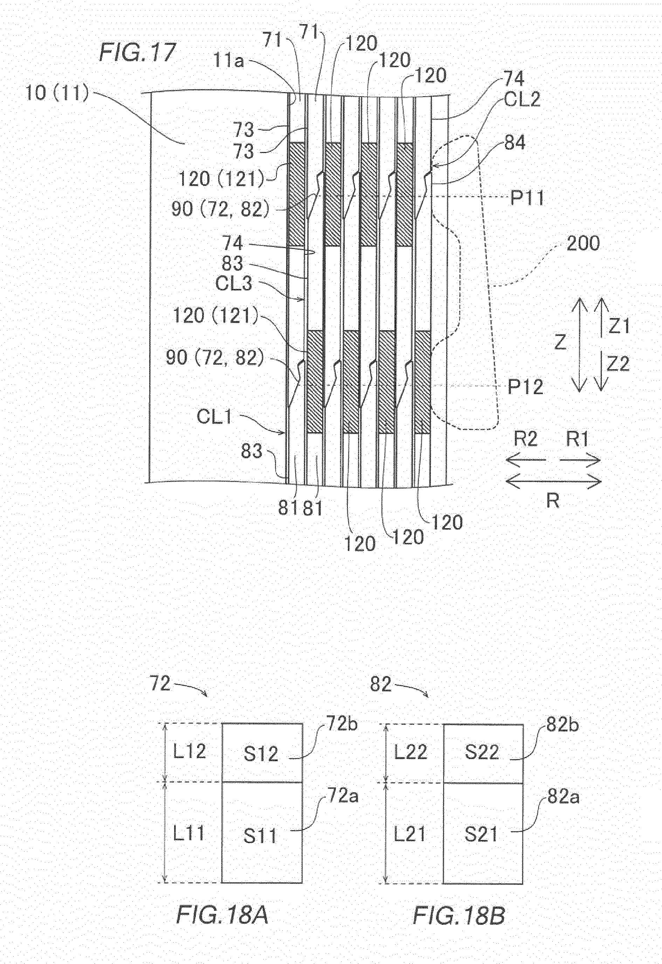

For example, as illustrated in FIG. 17, a clearance CL1 is formed in the radial direction between the wall portion 11a and the second other end surface 83 of the second slot housed portion 81 disposed on the radially outermost side. Meanwhile, a clearance CL2 is formed in the radial direction between the pressing jig 200 and the first one end surface 74 of the first slot housed portion 71 disposed on the radially innermost side during manufacture of the stator 100.

In the present embodiment, in addition, as illustrated in FIG. 16, the first deviation width d1 is equal to a second deviation width d2 which is the width of the deviation between a radial position P3 of the first one end surface 74 and a radial position P4 of the second one end surface 84 (height of the step of the first stepped portion 112). That is, a width W21, in the radial direction, of the first slot housed portion 71 is generally equal to a width W22, in the radial direction, of the second slot housed portion 81. In addition, the first slot housed portion 71 is disposed as displaced toward the radially outer side with respect to the second slot housed portion 81.

As illustrated in FIG. 17, a plurality of (e.g. eight) first slot housed portions 71 and second slot housed portions 81 are disposed adjacent to each other in the radial direction in the slot 12. That is, the plurality of first slot housed portions 71 are disposed in parallel in the radial direction, and the plurality of second slot housed portions 81 are disposed in parallel in the radial direction.

In the slot 12, the first facing surface 72 (joint portion 90) of one first slot housed portion 71, among the plurality of first slot housed portions 71, is disposed at a different position in the center axis direction from a different first facing surface 72 (joint portion 90) that is adjacent in the radial direction. In the slot 12, in addition, the second facing surface 82 of one second slot housed portion 81, among the plurality of second slot housed portions 81, is disposed at a different position in the center axis direction from a different second facing surface 82 that is adjacent in the radial direction. That is, in the present embodiment, an axial position P11 of the joint portion 90 which is constituted from the first facing surface 72 and the second facing surface 82 is different from an axial position P12 of the joint portion 90 which is constituted from a different first facing surface 72 and a different second facing surface 82 that are adjacent in the radial direction.

In other words, the first slot housed portions 71 and the second slot housed portions 81 are disposed in a staggered manner along the radial direction at the axial positions P11 and P12. The first other end surface 73 is disposed (offset) so as to project toward the radially outer side with respect to the corresponding second other end surface 83 at each of the plurality of joint portions 90. In addition, the second one end surface 84 is disposed (offset) so as to project toward the radially inner side with respect to the corresponding first one end surface 74 at each of the plurality of joint portions 90. Consequently, a clearance CL3 in the radial direction is formed between the first one end surface 74 and the second other end surface 83 in the radial direction.

### <Configuration of First Facing Surface and Second Facing Surface>

Here, in the present embodiment, as illustrated in FIG. 16, the first facing surface 72 of the first slot housed portion 71 and the second facing surface 82 of the second slot housed portion 81 are formed so as to be inclined with respect to the axial direction. Specifically, the first facing surface 72 is constituted as an end surface inclined with respect to the axial direction from the distal end 75 of the first slot housed portion 71 in the direction of the arrow E1. In addition, the first facing surface 72 is not provided with the insulating coating 40a. The second facing surface 82 is constituted as an end surface inclined from the distal end 85 of the second slot housed portion 81 in the direction of the arrow E2. In addition, the second facing surface 82 is not provided with the insulating coating 40a. The direction of the arrow E1 means a direction from the distal end 75 toward the boundary point 76 between the first facing surface 72 and the first one end surface 74. The direction of the arrow E2 means a direction from the distal end 85 toward the boundary point 86 between the second facing surface 82 and the second other end surface 83.

The first facing surface 72 and the second facing surface 82 are each formed such that the sectional surface thereof taken along the radial direction has an S-shape. In other words, the first facing surface 72 is formed into a recessed and projected shape to be recessed and projected in the radial direction, and the second facing surface 82 is formed into a recessed and projected shape, corresponding to the recessed and projected shape of the first facing surface 72, to be recessed and projected in the radial direction. The first facing surface 72 which has an S-shape (recessed and projected shape) and the second facing surface 82 which has an S-shape (recessed and projected shape) are disposed in the slot 12 with the first facing surface 72 and the second facing surface 82 engaged with each other in the radial direction.

Here, in the present embodiment, a part of the first facing surface 72 and a part of the second facing surface 82 are joined to each other using a joint material 130. Particularly, the first facing surface 72 includes a first joint surface 72a to be joined to the second facing surface 82 and a first inverse inclination surface 72b formed to be continuous with the first joint surface 72a and inclined in the direction (direction of the arrow E12) which is opposite to the direction (direction of the arrow E11) in which the first joint surface 72a is inclined with respect to the axial direction (axis that is parallel to the center axis C1). In addition, the first joint surface 72a and the first inverse inclination surface 72b are each formed as a generally flat surface, and the first joint surface 72a and the first inverse inclination surface 72b form a bent shape. In addition, the second facing surface 82 includes a second joint surface 82a to be joined to the first joint surface 72a and a second inverse inclination surface 82b formed to be continuous with the second joint surface 82a and inclined in the direction (direction of the arrow E22) which is opposite to the direction (direction of the arrow E21) in which the second joint surface 82a is inclined with respect to the axial direction.

The joint material 130 is disposed between the first joint surface 72a and the second joint surface 82a, and joins the first joint surface 72a and the second joint surface 82a to be electrically connected to each other. Specifically, the joint material 130 contains a conductive material such as silver or copper. Preferably, the joint material 130 is a joint material (silver nano paste) in a paste form in which a solvent contains conductive particles which are metal particles obtained by making silver finer to the nanometer level. In addition, the joint material 130 contains a member (resin member) to be volatilized when heated, and has a function of bringing the first joint surface 72a and the second joint surface 82a closer to each other with the volume of the joint material 130 decreased when the member to be volatilized is heated.

In the present embodiment, an inclination angle θ2 of the first inverse inclination surface 72b and the second inverse inclination surface 82b with respect to the axial direction is smaller than an inclination angle θ1 of the first joint surface 72a and the second joint surface 82a with respect to the axial direction. Consequently, it is possible to prevent a minimum width W31, in the radial direction, of the first slot housed portion 71 on the root side (side in the direction of the arrow Z1) with respect to the first joint surface 72a from being small.

In addition, as illustrated in FIG. 18, an area S11 of the first joint surface 72a is larger than an area S12 of the first inverse inclination surface 72b, and an area S21 of the second joint surface 82a is larger than an area S22 of the second inverse inclination surface 82b. That is, a length L11 of the first joint surface 72a along the direction of the arrow E11 is longer than a length L12 of the first inverse inclination surface 72b along the direction of the arrow E12, and a length L21 of the second joint surface 82a along the direction of the arrow E21 is longer than a length L22 of the second inverse inclination surface 82b along the direction of the arrow E21.

As illustrated in FIG. 16, the first facing surface 72 includes a first spaced facing surface 72c formed to be continuous with the first inverse inclination surface 72b on the opposite side from the first joint surface 72a and disposed as spaced from the second facing surface 82. In addition, the second facing surface 82 includes a second spaced facing surface 82c formed to be continuous with the second inverse inclination surface 82b on the opposite side from the second joint surface 82a and disposed as spaced from the first facing surface 72.

Particularly, the first spaced facing surface 72c is inclined in the direction of the arrow E13 which is opposite to the first inverse inclination surface 72b with respect to the axial direction (axis that is parallel to the center axis C1). In addition, the first spaced facing surface 72c is smoothly connected to the first inverse inclination surface 72b with the connection portion formed in an arcuate shape (round shape). The second spaced facing surface 82c is disposed to face the first spaced facing surface 72c, and a clearance CL4 is provided between the first spaced facing surface 72c and the second spaced facing surface 82c.

In addition, the first facing surface 72 and the second facing surface 82 are each formed such that the sectional surface thereof taken along the radial direction has an asymmetrical shape with respect to a center point C2 of the first facing surface 72. Specifically, the first facing surface 72 and the second facing surface 82 are configured such that, in the case where the center point C2 is defined as the middle point between the distal end 75 and the boundary point 76 and the first facing surface 72 is rotated by 180 degrees about the center point C2, the shape of the first facing surface 72 which has been rotated and the shape of the second facing surface 82 do not coincide with each other. Particularly, an asymmetrical shape is achieved since the first facing surface 72 includes the first joint surface 72a, the first inverse inclination surface 72b, and the first spaced facing surface 72c which are provided in this order from the distal end 75 of the first slot housed portion 71, while the second facing surface 82 includes the second spaced facing surface 82c, the second inverse inclination surface 82b, and the second joint surface 82a which are provided in this order from the distal end 85 of the second slot housed portion 81.

In addition, the distal end 75 of the first slot housed portion 71 and the distal end 85 of the second slot housed portion 81 are each formed as a flat surface that is orthogonal to the axial direction. Particularly, the distal ends 75 and 85 are provided between the first facing surface 72 and the first other end surface 73 and between the second facing surface 82 and the second other end surface 83, respectively, to have a chamfered shape.

### <Configuration of Insulating Portions>

Here, in the present embodiment, the coil portion 30 is provided with insulating portions 120. As illustrated in FIG. 17, an insulating portion 120 is provided on the conductor surface 40b (see FIG. 8B) of one segment conductor 40, among the plurality of segment conductors 40 (general conductors 41, power conductors 50, and neutral point conductors 60) which are disposed in parallel, at an axial position corresponding to the joint portion 90 of a different segment conductor 40 (hereinafter this joint portion 90 will be referred to as an "adjacent joint portion 90") disposed adjacent to the one segment conductor 40 in the radial direction. The insulating portion 120 has a thickness t2 which is larger than the thickness t1 of the insulating coating 40a of the adjacent joint portion 90 (different segment conductor 40). Consequently, an insulation resistance r2 of the insulating portion 120 is higher than the insulation resistance r1 of the insulating coating 40a alone. In addition, the insulating portions 120 are provided at the positions P11 and P12 (see FIG. 17), in the center axis direction, at which the adjacent joint portion 90 is present. The adjacent joint portion 90 is an example of the "adjacent joint portion" in the claims. In addition, the insulation resistance r1 is an example of the "first insulation resistance" in the claims. In addition, the insulation resistance r2 is an example of the "second insulation resistance" in the claims.

Specifically, as illustrated in FIG. 8B, the insulating portion 120 includes the insulating coating 40a which is provided on the conductor surface 40b and which has the thickness t1, and an insulating member 121 that covers the insulating coating 40a and that has a function of insulating the segment conductor 40 and the adjacent joint portion 90 from each other. A thickness t3 of the insulating member 121 is smaller than the thickness t1. That is, the thickness t2 is larger than the thickness t1, and less than twice the thickness t1.

Particularly, the insulating member 121 is formed in a sheet shape. For example, the insulating member 121 contains the same material as the material contained in the insulating coating 40a. Preferably, the insulating member 121 contains an insulation material such as polyimide. The insulating member 121 in a sheet shape is wound around the outer periphery of the insulating coating 40a of the segment conductor 40 for at least one round (e.g. more than one round and less than two rounds). For example, the insulating member 121 in a sheet shape is fixed to the insulating coating 40a using an adhesive with insulation properties etc.

As illustrated in FIG. 9, the insulating portion 120 (insulating member 121) is provided on the slot housed portion 42a, of the slot housed portions 42a and 42b, the length of which along the axial direction is the longer. In addition, the insulating member 121 is provided on each of the plurality of slot housed portions 42a, while the insulating member 121 is not provided on the plurality of slot housed portions 42b.

A length L31 of the insulating portion 120 (insulating member 121) in the axial direction is equal to or more than an insulation creepage distance Dc along the center axis direction from the adjacent joint portion 90, and less than the length L3 of the slot 12 in the axial direction. Particularly, the length L31 of the insulating portion 120 (insulating member 121) is set to be at least equal to or more than the insulation creepage distance Dc with respect to the closer one of the distal end 75 of the first slot housed portion 71 and the distal end 85 of the second slot housed portion 81 which are adjacent in the radial direction. That is, as illustrated in FIG. 17, the insulation properties are secured by securing the insulation creepage distance Dc between the first facing surface 72 and the second facing surface 82, which are not provided with the insulating coating 40a, and the adjacent slot housed portion 42a.

### [Method of Manufacturing Stator]

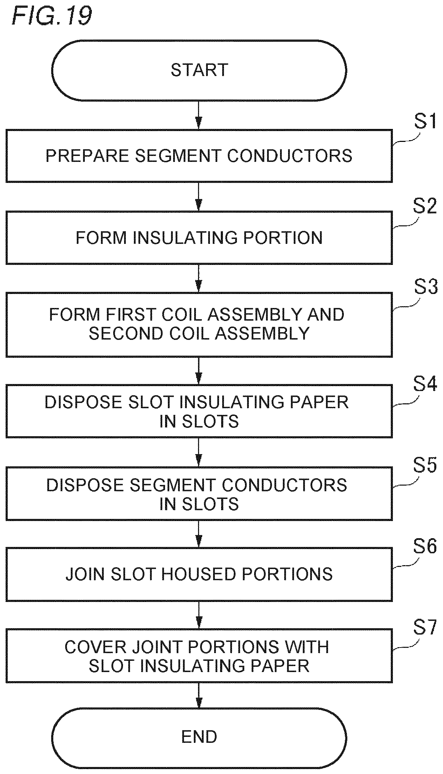

Next, a method of manufacturing the stator 100 according to the present embodiment will be described. FIG. 19 is a flowchart illustrating the method of manufacturing the stator 100.

### (Step of Preparing Segment Conductors)

First, in step S1, a plurality of segment conductors 40 are prepared. Specifically, the power conductors 50 which constitute the power line connection end portions Pt for the individual phases of the coil portion 30 which is connected through a Y connection, the neutral point conductors 60 which constitute the neutral point connection end portions Nt for the individual phases of the coil portion 30, and the general conductors 41 which constitute the other portions of the coil portion 30 are prepared.

For example, as illustrated in FIG. 8A, an insulating coating 40a made of an insulation material such as polyimide is formed (coated) on the conductor surface 40b in a rectangular shape which is made of a conductive material such as copper. After that, the conductor (rectangular conductive wire) on which the insulating coating 40a is formed is shaped using a shaping jig (not illustrated) to form the general conductors 41 (see FIG. 9), the radially outer power conductors 52 and the radially inner power conductors 53 (see FIG. 10) for forming the power conductors 50, two U-phase/W-phase neutral point segment conductors 61a and two V-phase neutral point segment conductors 61b for forming the radially outer neutral point conductor 61 (see FIG. 13), and two U-phase/W-phase neutral point segment conductors 62a and two V-phase neutral point segment conductors 62b for forming the radially inner neutral point conductor 62 (see FIG. 15).

### <Formation of General Conductors>

Particularly, as illustrated in FIG. 9, the general conductors 41 are each formed by forming a pair of slot housed portions 42a and 42b to be disposed in different slots 12 (e.g. with a slot pitch of six) and having different axial lengths from each other and a coil end portion 43 that connects between the pair of slot housed portions 42a and 42b.

### <Formation of Power Conductors>

In the present embodiment, as illustrated in FIG. 10, the power conductors 50 are each formed by electrically connecting the radially outer power conductor 52 and the radially inner power conductor 53 to each other by electrically joining (performing a power conductor joint step) the radially outer power conductor 52 and the radially inner power conductor 53 to the common power terminal member 51 via the lead wires 54. The power conductors 50 are formed for the respective phases.

Particularly, the welded portions 52c are formed by welding (joining) two power line coil end portions 52a, which constitute two power line connection end portions Pt and which are led out in the axial direction from two slot housed portions 42a, and the conductor plate 52b to each other, so that the radially outer power conductor 52 is formed. In addition, the joint portions 53c are formed by brazing or welding (joining) two power line coil end portions 53a, which constitute two power line connection end portions Pt and which are led out in the axial direction from the slot housed portions 42b, and the conductor plate 53b to each other, so that the radially inner power conductor 53 is formed. For example, the welding is implemented through any of resistance welding, arc welding, laser welding, and high-energy beam welding. Consequently, the radially outer power conductor 52 and the radially inner power conductor 53 with a slot pitch of one (in the case where the conductor plates 52b and 53b are included) or zero (in the case where the conductor plates 52b and 53b are not included) are formed.

In addition, a plurality of lead wires 54 with the insulating tube 51a attached to the outer periphery thereof and which are joined to the power terminal member 51 are prepared. The lead wire 54 is welded to the radially outer side of the conductor plate 52b of the radially outer power conductor 52 to form the joint portion 52d. In addition, the lead wire 54 is welded to the axially outer side (side in the direction of the arrow Z1) of the conductor plate 53b of the radially inner power conductor 53 to form the welded portion 53d. Consequently, the power conductors 50 which have a bifurcated shape in which the radially outer power conductor 52 is disposed on the radially outer side and the radially inner power conductor 53 is disposed on the radially inner side are formed.

### <Formation of Neutral Point Conductors>

As illustrated in FIG. 13, the U-phase/W-phase neutral point segment conductors 61a which each include the neutral point coil end portion 61c which connects between the slot housed portion 42a for U-phase and the slot housed portion 42a for W-phase are shaped. In addition, the U-phase/W-phase neutral point segment conductors 61a are shaped such that the slot pitch of one of the two U-phase/W-phase neutral point segment conductors 61a is nine while the slot pitch of the other is seven. One of the two U-phase/W-phase neutral point segment conductors 61a is disposed on the axially outer side (side in the direction of the arrow Z1) of the other. The V-phase neutral point segment conductors 61b which each include the slot housed portion 42a for V-phase and the neutral point coil end portion 61d are shaped.

After that, the welded portions 61e are formed by welding (performing a neutral point conductor joint step) the two neutral point coil end portions 61d on end surfaces of the two neutral point coil end portions 61c on the radially outer side (to each other). Consequently, the radially outer neutral point conductor 61 (neutral point conductor 60) in which the neutral point connection end portions NtU of the U-phase coil portion 30U, the neutral point connection end portions NtV of the V-phase coil portion 30V, and the neutral point connection end portions NtW of the W-phase coil portion 30W are electrically connected to each other is formed.

As illustrated in FIG. 15, the U-phase/W-phase neutral point segment conductors 62a which each include the neutral point coil end portion 62c which connects between the slot housed portion 42b for U-phase and the slot housed portion 42b for W-phase are shaped. In addition, the U-phase/W-phase neutral point segment conductors 62a are shaped such that the slot pitch of one of the two U-phase/W-phase neutral point segment conductors 62a is nine while the slot pitch of the other is seven. The V-phase neutral point segment conductors 62b which each include the slot housed portion 42b for V-phase and the neutral point coil end portion 62d are shaped.

After that, the welded portions 62e are formed by welding the two neutral point coil end portions 62d on end surfaces of the two neutral point coil end portions 62c on the axially outer side (to each other). Consequently, the radially inner neutral point conductor 62 (neutral point conductor 60) in which the neutral point connection end portions NtU of the U-phase coil portion 30U, the neutral point connection end portions NtV of the V-phase coil portion 30V, and the neutral point connection end portions NtW of the W-phase coil portion 30W are electrically connected to each other is formed.

### <Formation of Insulating Portion>

In the present embodiment, in step S2 (see FIG. 19), the insulating portion 120 which has the thickness t2 which is larger than the thickness t1 of the insulating coating 40a of the joint portion 90 is provided on the conductor surface 40b of a portion of the segment conductor 40 that is different from a first surface 172 and a second surface 182. Consequently, the insulation resistance r2 of the insulating portion 120 is higher than the insulation resistance r1 of the insulating coating 40a alone.

As illustrated in FIG. 9, the insulating portion 120 is formed by attaching the insulating member 121 to the slot housed portion 42a, of the pair of slot housed portions 42a and 42b, the length of which along the axial direction is the longer. Specifically, the insulating member 121 is attached to each of the slot housed portions 42a of the general conductors 41, the slot housed portions 42a of the radially outer power conductors 52, and the slot housed portions 42a of the radially outer neutral point conductor 61.

Particularly, as illustrated in FIG. 8B, the insulating member 121 in a sheet shape which has the thickness t3 which is smaller than the thickness t1 is wound around the slot housed portion 42a for one round or more (e.g. more than one round and less than two rounds) to be fixed. Consequently, in the case where the number of times of winding is one (one round), the insulating portion 120 which has the thickness t2 (= t1 + t3) which is larger than the thickness t1 is formed on the slot housed portion 42a.

### (Formation of First Coil Assembly and Second Coil Assembly)

In step S3, as illustrated in FIG. 3, the first coil assembly 30a and the second coil assembly 30b in a circular ring shape which are composed of a plurality of segment conductors 40 are formed.

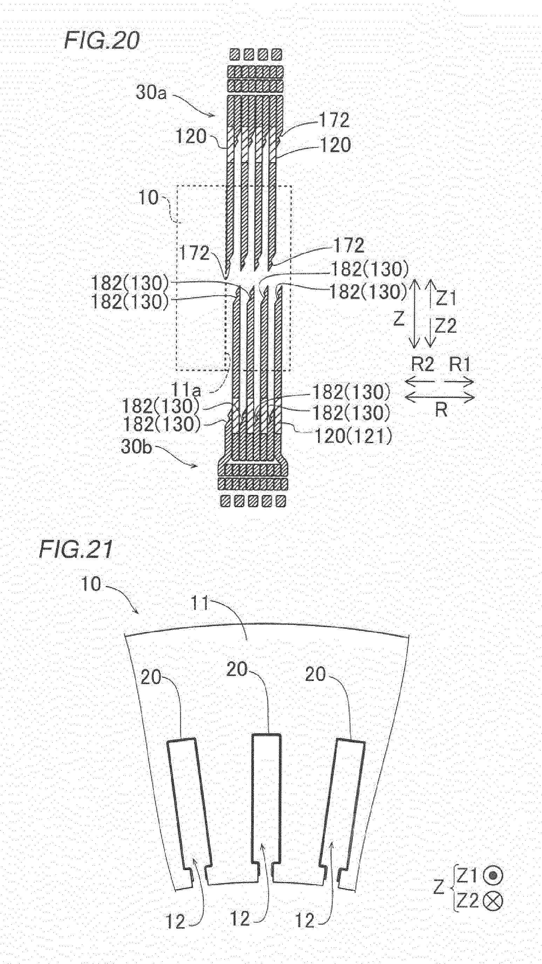

In the present embodiment, as illustrated in FIGS. 3 and 20, the first coil assembly 30a and the second coil assembly 30b in a circular ring shape which are composed of a plurality of segment conductors 40 are formed such that the insulating portion 120 of one segment conductor 40 is positioned at a position adjacent, in the radial direction, to the joint portion 90 of a different segment conductor 40 disposed adjacent to the one segment conductor 40 in the radial direction. While only some (two) of the plurality of insulating portions 120 are illustrated as hatched for illustration in FIG. 3, all the slot housed portions 42a are provided with the insulating portions 120 in the present embodiment.

Specifically, as illustrated in FIG. 3, the first coil assembly 30a in a circular ring shape is formed such that the plurality of general conductors 41, the power conductors 50 for the three phases, and the radially outer neutral point conductor 61 and the radially inner neutral point conductor 62 have an arrangement relationship that is generally similar to that of such conductors at the time when the conductors are disposed in the plurality of slots 12 (with the stator 100 in the completed state). In addition, the second coil assembly 30b in a circular ring shape is formed such that the plurality of general conductors 41 have an arrangement relationship that is generally similar to that of such conductors at the time when the conductors are disposed in the plurality of slots 12.

Particularly, as illustrated in FIG. 20, the first coil assembly 30a and the second coil assembly 30b are formed such that a plurality of (e.g. eight) segment conductors 40 are arranged in parallel in the radial direction and sets of the segment conductors 40 are arranged in parallel in the circumferential direction as many as the number of the slots 12. At this time, in the present embodiment, the first coil assembly 30a and the second coil assembly 30b are formed such that the insulating portion 120 of one segment conductor 40, among the plurality of segment conductors 40 which are disposed in parallel, is positioned at an axial position corresponding to the joint portion 90 of a different segment conductor 40 disposed adjacent to the one segment conductor 40 in the radial direction.

### (Step of Disposing Slot Insulating Paper in Slots)

In step S4 (see FIG. 19), as illustrated in FIG. 21, the slot insulating paper 20 is disposed in each of the plurality of slots 12. The slot insulating paper 20 is disposed with the radially inner side and both sides in the axial direction released or opened. In addition, as illustrated in FIG. 3, the slot insulating paper 20 which has been disposed is held in the slots 12 using the collar portions 22 on both sides in the axial direction.

### (Step of Disposing Segment Conductors in Slots)

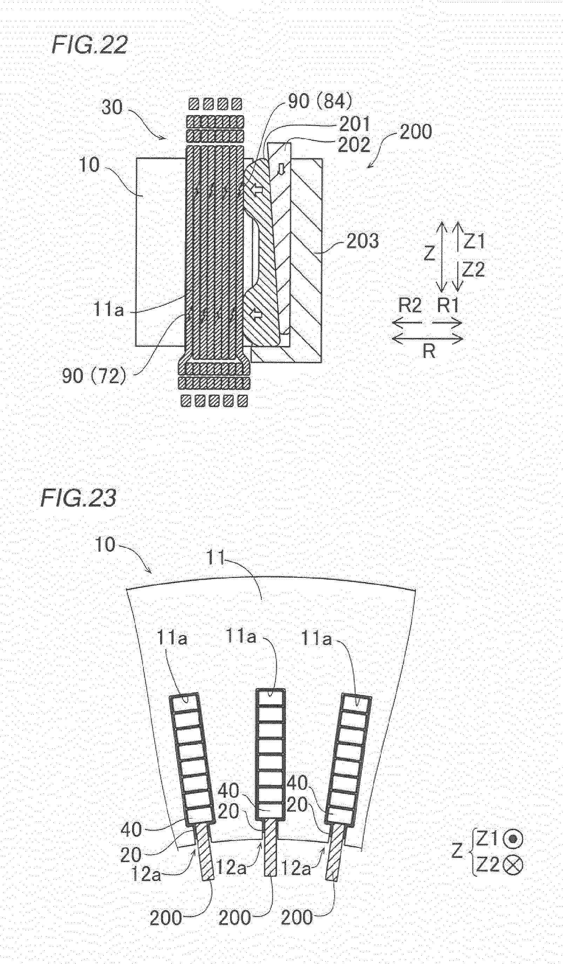

In step S5 (see FIG. 19), as illustrated in FIGS. 20 and 22, the plurality of segment conductors 40 are disposed in the plurality of slots 12. That is, the first coil assembly 30a and the second coil assembly 30b are inserted into the plurality of slots 12.

Particularly, first, as illustrated in FIG. 3, the first coil assembly 30a is disposed on the side in the direction of the arrow Z1 with respect to (e.g. directly above) the stator core 10. In addition, the second coil assembly 30b is disposed on the side in the direction of the arrow Z2 with respect to (e.g. directly below) the stator core 10. At this time, as illustrated in FIG. 20, the joint material 130 is disposed on at least one of the first surface 172 of the first slot housed portion 71 of the first coil assembly 30a and the corresponding second surface 182 of the second slot housed portion 81 of the second coil assembly 30b which face each other in the axial direction.

As illustrated in FIG. 22, the slot housed portions 42a and 42b of the first coil assembly 30a and the second coil assembly 30b are disposed in the respective slots 12 of the plurality of slots 12 by relatively moving the first coil assembly 30a and the second coil assembly 30b in the axial direction with respect to the plurality of slots 12. For example, the slot housed portions 42a and 42b are disposed in the respective slots 12 of the plurality of slots 12 (slots 12 in which the slot insulating paper 20 is disposed) by translating (linearly moving) the first coil assembly 30a in the direction of the arrow Z2 with respect to the stator core 10 and translating (linearly moving) the second coil assembly 30b in the direction of the arrow Z1 with respect to the stator core 10.

As illustrated in FIG. 16, the plurality of segment conductors 40 are disposed in the plurality of slots 12 such that: the first surface 172 to form the first facing surface 72 of the first slot housed portion 71, which is the slot housed portion 42a or 42b of the plurality of segment conductors 40 of the first coil assembly 30a, directs to the radially inner side; the first other end surface 73 of the first slot housed portion 71 directs to the radially outer side; the second surface 182 to form the second facing surface 82 of the second slot housed portion 81, which is the slot housed portion 42a or 42b of the plurality of segment conductors 40 of the second coil assembly 30b, and the second other end surface 83 which is continuous with the second surface 182 direct to the radially outer side; and the first slot housed portion 71 and the second slot housed portion 81 face each other in the axial direction.

Particularly, at least a portion of the first facing surface 72 to form the first joint surface 72a and a portion of the second facing surface 82 to form the second joint surface 82a are proximate to (contact) each other via the joint material 130 because a recessed and projected portion of the first surface 172 as the first facing surface 72, which is recessed and projected in the radial direction, and a recessed and projected portion of the second surface 182 as the second facing surface 82, which is recessed and projected in the radial direction, are engaged with each other.

At this time, the first other end surface 73 is disposed (offset) so as to project toward the radially outer side with respect to the second other end surface 83, and the second one end surface 84 is disposed (offset) so as to project toward the radially inner side with respect to the first one end surface 74.

In addition, as illustrated in FIG. 17, the plurality of segment conductors 40 are disposed in the slots 12 such that the insulating portion 120 of one segment conductor 40, among the plurality of segment conductors 40 which are disposed in parallel in the radial direction, is positioned at an axial position corresponding to the first facing surface 72 or the second facing surface 82 (a portion to form the joint portion 90) of a different segment conductor 40 disposed adjacent to the one segment conductor 40 in the radial direction with the first coil assembly 30a and the second coil assembly 30b disposed in the slots 12.

### (Step of Joining Slot Housed Portions)

In step S6 (see FIG. 19), the joint portion 90 is formed as at least a part (first joint surface 72a) of the first facing surface 72 and at least a part (second joint surface 82a) of the second facing surface 82 are joined to each other by a heating device (not illustrated) heating at least the joint material 130 while the pressing jig 200 is pressing the slot housed portions 42a and 42b (against each other).

Here, as illustrated in FIG. 22, the pressing jig 200 is provided with movable members 201, pressing members 202, and a holding member 203. The number of the movable members 201 is the same as the number of the slots 12. The holding member 203 is configured to hold the movable members 201 and the pressing members 202. In addition, the pressing members 202 are each formed in a wedge shape (tapered shape) to be tapered toward one axial side, for example, and configured to transfer a pressing force to the segment conductors 40 while moving the movable member 201 toward the radially outer side by pressing the movable member 201 toward the radially outer side when the pressing member 202 is moved in the axial direction.

As illustrated in FIG. 23, the pressing jigs 200 (movable members 201) are disposed in the opening portions 12a of the slots 12 (on the radially inner side of the slots 12). Consequently, the plurality of slot housed portions 42a and 42b which are arranged in parallel in the radial direction are interposed between the pressing jigs 200 and the wall portions 11a of the stator core 10 on both sides in the radial direction. When the pressing jigs 200 apply a pressing force (load) to the plurality of slot housed portions 42a and 42b, which are arranged in parallel in the radial direction, toward the radially outer side, a reaction force directed from the wall portions 11a toward the radially inner side is generated, and the plurality of slot housed portions 42a and 42b which are arranged in parallel in the radial direction are pressed from both sides in the radial direction.

Here, in the present embodiment, with the first other end surface 73 disposed (offset) so as to project toward the radially outer side with respect to the second other end surface 83, the first slot housed portion 71 is pressed toward the radially inner side by the wall portion 11a of the stator core 10 as the wall portion 11a contacts the first other end surface 73 of the first slot housed portion 71 disposed on the radially outermost side, among the plurality of first slot housed portions 71. In addition, with the second one end surface 84 disposed (offset) so as to project toward the radially inner side with respect to the first one end surface 74, the second slot housed portion 81 is pressed toward the radially outer side by the pressing jig 200 as the pressing jig 200 contacts the second one end surface 84 of the second slot housed portion 81 disposed on the radially innermost side, among the plurality of second slot housed portions 81.

Consequently, the first facing surface 72 and the second facing surface 82 are pressed against each other in the direction in which the first facing surface 72 and the second facing surface 82 face each other. With a pressing force and a reaction force transferred between the slot housed portions 42a and 42b which are disposed in parallel in the radial direction, the first other end surface 73 of the first slot housed portion 71 disposed on the radially outermost side and the first other end surface 73 of the first slot housed portion 71 on the radially innermost side or the first other end surfaces 73 of the first slot housed portions 71 other than the second slot housed portions 81 are pressed toward the radially outer side, and the second one end surfaces 84 of the second slot housed portions 81 are pressed toward the radially inner side.

Particularly, the first facing surface 72 and the second facing surface 82 which face each other in the slot 12 are pressed against each other as the insulating member 121 of the first slot housed portion 71 contacts the first other end surface 73 or the second one end surface 84 which is adjacent in the radial direction.

The joint material 130 is cured with a part thereof volatilized when the joint material 130, the first slot housed portion 71, and the second slot housed portion 81 are heated by a heating device (such as a heater, hot air, etc.) while the first facing surface 72 and the second facing surface 82 are pressed against each other. The joint material 130 is heated to a curing temperature or higher. The first slot housed portion 71 and the second slot housed portion 81 are joined and electrically connected to each other using a conductive material (such as silver) contained in the joint material 130. All the first joint surfaces 72a and the second joint surfaces 82a that face each other are joined to each other in all the slots 12.

Consequently, the first slot housed portion 71 of the power conductor 50 and the neutral point conductor 60 and the second slot housed portion 81 which is one of the slot housed portions 42a and 42b of the general conductor 41 are joined to each other in one slot 12, and the second slot housed portion 81 which is the other of the slot housed portions 42a and 42b of the general conductor 41 and the first slot housed portion 71 of the general conductor 41 are joined to each other in a different slot 12. As a result, the coil portion 30 in a wave-wound shape is formed.

As illustrated in FIG. 17, the first slot housed portion 71 and the second slot housed portion 81 are electrically joined to each other to form the joint portion 90. Consequently, the insulating portion 120 is disposed at a position (axial position) adjacent to the joint portion 90 in the radial direction. In addition, the axial position P11 of the joint portion 90 is different from the axial position P12 of the joint portion 90 of the segment conductor 40 which is adjacent in the radial direction. In addition, a different joint portion 90 is not provided at a position adjacent to the joint portion 90 in the radial direction.

### (Step of Covering Joint Portions with Slot Insulating Paper)

In step S7 (see FIG. 19), as illustrated in FIG. 5, the joint portion cover portion 21 which covers at least the joint portion 90 is formed by deforming (folding) the slot insulating paper 20 such that the radially inner side of the first slot housed portion 71 and the second slot housed portion 81 disposed on the radially innermost side is covered by the slot insulating paper 20. After that, the stator 100 is completed as illustrated in FIG. 2. As illustrated in FIG. 1, the stator 100 and the rotor 101 are combined with each other to manufacture the rotary electric machine 102.

### [Effects of Structure According to Present Embodiment]

The following effects can be obtained with the structure according to the embodiment described above.

In the embodiment described above, an insulating portion (120) is provided on a conductor surface (40b) of one segment conductor (40), among the plurality of segment conductors (40) which are disposed in parallel, at a position (P11, P12) in the center axis (C1) direction corresponding to an adjacent joint portion (90) which is the joint portion (90) of a different segment conductor (40) disposed adjacent to the one segment conductor (40) in the radial direction. The insulating portion (120) has a second insulation resistance (r2) which is higher than a first insulation resistance (r1) of an insulating coating (40a) of the different segment conductor (40). Consequently, the insulation resistance (r2) of the insulating portion (120) of the one segment conductor (40) at a position adjacent to the adjacent joint portion (90) can be made relatively high, and thus the insulation performance between the adjacent joint portion (90) and the segment conductor (40) which is adjacent to the adjacent joint portion (90) can be improved. As a result, the insulation performance between the adjacent joint portion (90) and the adjacent segment conductor (40) can be secured in the case where the segment conductors (40) are to be joined to each other, even in the case where the conductor (72, 82) of the adjacent joint portion (90) is exposed.

In the embodiment described above, in addition, the insulating portion (120) has the second insulation resistance (r2) which is higher than the first insulation resistance (r1) as the insulating portion (120) has a second thickness (t2) which is larger than a first thickness (t1) which is a thickness of the insulating coating (40a) of the different segment conductor (40). With such a configuration, the second insulation resistance (r2) can be easily made higher than the first insulation resistance (r1) by making the second thickness (t2) of the insulating portion (120) larger than the first thickness (t1) of the insulating coating (40a). In addition, the size (physical size) of the segment conductors (40) can be prevented from being large in portions other than the insulating portion (120) (a portion that requires the second thickness (t2)) unlike the case where all the insulating coating (40a) on the plurality of segment conductors (40) is configured to have the second thickness (t2) which is relatively large. As a result, an increase in the size of the armature (100) can be prevented. Consequently, the insulation performance between the adjacent joint portion (90) and the segment conductor (40) which is adjacent to the adjacent joint portion (90) can be secured while preventing an increase in the size of the armature (100).

In the embodiment described above, in addition, the insulating portion (120) includes the insulating coating (40a) which has the first thickness (t1) and an insulating member (121) that covers the insulating coating (40a) and that has a function of insulating the segment conductor (40) and the adjacent joint portion (90) from each other. Here, it is not easy to configure the thickness of the insulating coating (40a) which is provided on the segment conductors (40) to be varied partially. With the configuration according to the embodiment described above, in view of the above, the insulating portion (120) which is constituted from the insulating member (121) and the insulating coating (40a) can be easily formed by forming the segment conductors (40) provided with the insulating coating (40a) which has the generally uniform first thickness (t1) and thereafter attaching the insulating member (121) which is formed separately from the insulating coating (40a) to the segment conductors (40). Consequently, there is no need to use dedicated conductive wires (segment conductors) that have an insulating coating that has different thicknesses from part to part since the configuration is unlike the case where the insulating portion (120) is constituted by varying the thickness of a part of the insulating coating (40a) of the segment conductors (40). Consequently, general-purpose conductive wires (segment conductors) that have an insulating coating with a uniform thickness can be used, and thus the insulating portion (120) can be constituted accordingly easily.

In the embodiment described above, in addition, a third thickness (t3) which is a thickness of the insulating member (121) is smaller than the first thickness (t1). Here, in general, the first thickness (t1) of the segment conductors (40) is set to such a level that enables securing the insulation performance between different phases. That is, the first thickness (t1) is set to such a level that enables securing the insulation performance even in the case where the coil end portions (43) for different phases which are provided with the insulating coating (40a) with the first thickness (t1) are disposed in proximity to each other. Meanwhile, it is only necessary that the insulation performance between the segment conductors (40) for the same phase should be secured in the case where only the segment conductors (40) for the same phase are disposed in the same slot (12). In other words, it is possible to secure the insulation performance between the adjacent joint portion (90) and the segment conductor (40) which is adjacent to the adjacent joint portion (90) in the slot (12) if the thickness of the insulating portion is less than twice the first thickness (t1) of the insulating coating (40a) of the adjacent segment conductors (40) and more than the first thickness (t1). In consideration of this respect, the thickness (t3) of the insulating member (121) can be prevented from being increased more than necessary by configuring the third thickness (t3) which is the thickness of the insulating member (121) to be less than the first thickness (t1) as in the embodiment described above. As a result, the size of the conductor (40c) can be secured accordingly since an increase in the thickness (t3) of the insulating member (121) is prevented. Thus, the insulation performance can be secured while preventing a reduction in the space factor (proportion of the conductor (40c) of the segment conductor (40)) in the slot (12).

In the embodiment described above, in addition, the insulating member (121) is formed in a sheet shape; and the insulating member (121) in the sheet shape is wound around an outer periphery of the insulating coating (40a) of the segment conductor (40) for at least one round. With such a configuration, the entire outer periphery of the segment conductor (40) can be covered by the insulating member (121). Thus, the insulation creepage distance (Dc) to the surface of the outer periphery of the segment conductor (40) from the adjacent joint portion (90) can be secured compared to a case where the insulating member (121) is provided on only a portion of the segment conductor (40) that faces the adjacent joint portion (90). In addition, by winding the insulating member (121) in a sheet shape around the outer periphery of the insulating coating (40a) of the segment conductor (40), the position of attachment of the insulating member (121) to the segment conductor (40) can be held by the wound insulating member (121) itself. Thus, the strength of fixation of the insulating member (121) to the segment conductor (40) can be improved.

In the embodiment described above, in addition, the segment conductor (40) includes a pair of leg portions (42a, 42b) disposed (in the slots (12)) at different circumferential positions and having different lengths along the center axis (C1) direction and a coil end portion (43) that connects between the pair of leg portions (42a, 42b); and the insulating portion (120) is provided on a leg portion (42a), of the pair of leg portions (42a, 42b), a length (L1) of which along the center axis (C1) direction is the longer. With such a configuration, the insulating portion (120) which is provided on the leg portion (42a) with the longer length (L1) can be positioned at a position in the center axis (C1) direction corresponding to the distal end portion (72, 82, 90) of the leg portion (42b) with the shorter length (L2), by disposing the leg portion (42a) with the longer length (L1) and the leg portion (42b) with the shorter length (L2) so as to be adjacent to each other in the radial direction. As a result, the configuration of the segment conductor (40) can be commonalized, and thus an increase in the number of types of parts of the armature (100) can be prevented.

In the embodiment described above, in addition, the insulating portion (120) is provided at a position, in the center axis direction, at which the adjacent joint portion (90) is present. With such a configuration, the insulation performance at the position (P11, P12) in the center axis direction at which the adjacent joint portion (90) which requires improved insulation performance is present can be effectively improved by the insulating portion (120).

In the embodiment described above, in addition, the joint portion (90) of the one segment conductor (40) and the joint portion (90) of the different segment conductor (40) are not provided adjacent to each other in the radial direction, but provided at different positions (P11, P12) in the center axis direction. With such a configuration, the insulation performance between the adjacent segment conductors (40) can be improved since a plurality of joint portions (90) are not adjacent to each other in the radial direction.

In the embodiment described above, in addition, the joint portions (90) of the plurality of segment conductors (40) which are disposed in parallel in the radial direction are disposed alternately in the radial direction at a position (P11) on one side in the center axis direction and a position (P12) on the other side in the center axis direction. With such a configuration, a plurality of segment conductors (40) can be easily disposed such that a plurality of joint portions (90) are not adjacent to each other in the radial direction. The insulation performance between the adjacent segment conductors (40) can be improved since a plurality of joint portions (90) are not adjacent to each other in the radial direction.

In the embodiment described above, in addition, a length (L31) of the insulating portion (120) in the center axis (C1) direction is equal to or more than an insulation creepage distance (Dc) along the center axis (C1) direction from the adjacent joint portion (90), and less than a length (L3) of the slots (12) in the center axis (C1) direction. With such a configuration, the insulation creepage distance (Dc) along the center axis (C1) direction from the adjacent joint portion (90) can be secured by the insulating portion (120). Thus, the insulation performance in the slot (12) can be further improved. In addition, the size of the insulating portion (120) can be prevented from being increased more than necessary by configuring the length (L31) of the insulating portion (120) in the center axis (C1) direction to be shorter than the length (L3) of the slot (12) in the center axis (C1) direction. As a result, the insulation performance in the slot (12) can be further improved while preventing an increase in the size of the insulating portion (120).

In the embodiment described above, in addition, the armature core (10) includes a plurality of teeth (13) formed on both sides, in a circumferential direction, of the slots (12); the armature further includes a slot insulating member (20) disposed between the teeth (13) and the segment conductors (40); the slots (12) each have an opening portion (12a) that opens on one side in the radial direction; and the slot insulating member (20) includes a joint portion cover portion (21) that covers one side, in the radial direction, of the joint portion (90) of a segment conductor (40) disposed closest to the opening portion (12a), among the plurality of segment conductors (40) which are disposed in parallel. Here, a different segment conductor (40) (insulating portion (120)) is not disposed on one side (the opening portion (12a) side), in the radial direction, of the segment conductor (40) disposed closest to the opening portion (12a). In view of the above, the insulation performance between one side (the opening portion (12a) side), in the radial direction, of the joint portion (90) of the segment conductor (40) disposed closest to the opening portion (12a) and a different conductor can be secured by the joint portion cover portion (21), by providing the slot insulating member (20) with the joint portion cover portion (21) as in the embodiment described above. As a result, the insulation performance in the slot (12) can be further improved by the insulating portion (120) and the slot insulating member (20).

### [Effects of Method of Manufacturing Armature According to Present Embodiment]

The following effects can be obtained with the method of manufacturing an armature according to the embodiment described above.

In the embodiment described above, the insulating portion (120) is provided on the segment conductors (40) (S2), and the plurality of segment conductors (40) are disposed in the armature core (10) such that the insulating portion (120) of one segment conductor (40) is positioned at a position (P11, P12) in the center axis direction corresponding to the distal end portion (72, 82) of a different segment conductor (40) disposed adjacent to the one segment conductor (40) in the radial direction. Consequently, it is possible to provide a method of manufacturing an armature (100) that enables securing the insulation performance between an adjacent joint portion (90) and a segment conductor (40) that is adjacent to the adjacent joint portion (90) in the case where the segment conductors (40) are to be joined to each other.

Here, it is not easy to perform the step (S2) of providing the insulating portion (120) after the step (S5) of disposing the plurality of segment conductors (40) in the slots (12). Specifically, after the step of disposing the plurality of segment conductors (40) in the slots (12), both the adjacent joint portion (90) and the plurality of segment conductors (40) are disposed in the slot (12), and therefore the adjacent joint portion (90) and the segment conductors (40) are proximate to each other with a slight clearance therebetween. In this case, it is considered to be difficult to provide the insulating portion (120) on the segment conductors (40). In the embodiment described above, in contrast, the step of disposing the plurality of segment conductors (40) in the slots (12) is performed after the step (S2) of providing the insulating portion (120). Consequently, the insulating portion (120) can be provided on the segment conductors (40) with the plurality of segment conductors (40) spaced from each other (with a space secured therebetween). As a result, the insulating portion (90) can be easily provided on the segment conductors (40) unlike the case where the insulating portion (120) is provided between the plurality of segment conductors (40) and the adjacent joint portion (90) with the plurality of segment conductors (40) disposed in the slots (12).

In the embodiment described above, in addition, the step (S2) of providing the insulating portion (120) is a step of providing the insulating portion (120), which has the second insulation resistance (r2) which is higher than the first insulation resistance (r1) as the insulating portion (120) has a second thickness (t2) which is larger than a first thickness (t1) which is a thickness of the insulating coating (40a) of the distal end portions (72, 82, 90), on the conductor surface (40b) of the portion (P11, P12) of the segment conductors (40) which is different from the distal end portions (72, 82, 90). With such a configuration, the second insulation resistance (r2) can be easily made higher than the first insulation resistance (r1) by making the second thickness (t2) of the insulating portion (120) larger than the first thickness (t1) of the insulating coating (40a).

In the embodiment described above, in addition, the segment conductor (40) includes a pair of leg portions (42a, 42b) disposed (in the slots (12)) at different circumferential positions and having different lengths along the center axis (C1) direction and a coil end portion (43) that connects between the pair of leg portions (42a, 42b); the step (S2) of providing the insulating portion (120) is a step of providing the insulating portion (120) by attaching an insulating member (121) to a leg portion (42a), of the pair of leg portions (42a, 42b), a length of which along the center axis (C1) direction is the longer; and the step (S6) of joining the distal end portions (72, 82, 90) to each other is a step of joining the distal end portions (72, 82, 90) to each other at a position adjacent to the insulating portion (120) in the radial direction in the slots (12). With such a configuration, the step (S2) of providing the insulating portion (120) can be performed when forming the segment conductors (40). For example, the step (S2) of providing the insulating portion (120) can be performed continuously with the step (S1) of forming the segment conductors (40). Consequently, the insulating portion (120) can be easily formed on the segment conductors (40) compared to the case where the insulating portion (120) is provided after the step (S5) of disposing the plurality of segment conductors (40). In addition, the configuration of the segment conductor (40) can be commonalized, and thus an increase in the number of types of parts of the armature (100) can be prevented.

In the embodiment described above, in addition, the method further includes a step (S3) of forming an annular coil assembly (30a, 30b) composed of the plurality of segment conductors (40), after the step (S2) of providing the insulating portion (120) and before the step (S5) of disposing the plurality of segment conductors (40), such that the insulating portion (120) of one segment conductor (40) is positioned at a position adjacent, in the radial direction, to the distal end portion (72, 82, 90) of a different segment conductor (40) disposed adjacent to the one segment conductor (40) in the radial direction; and the step (S5) of disposing the plurality of segment conductors (40) is a step of disposing the plurality of segment conductors (40) in the plurality of slots (12) by moving the annular coil assembly (30a, 30b) in the center axis (C1) direction with respect to the plurality of armature cores (10) so that the annular coil assembly (30a, 30b) is disposed in the plurality of armature cores (10) such that the plurality of segment conductors (40) are arranged in parallel in the radial direction of the armature core (10) and that the insulating portion (120) of one segment conductor (40) is positioned at a position (P11, P12) in the center axis (C1) direction corresponding to the distal end portion (72, 82, 90) of a different segment conductor (40). With such a configuration, the position (P11, P12) of correspondence, in the center axis (C1) direction, between the insulating portion (120) of one segment conductor (40) and the distal end portion (72, 82, 90) of a different segment conductor (40) can be fixed in advance before the plurality of segment conductors (40) are disposed in the armature core (10). Thus, the insulating portion (120) can be easily positioned at the position (P11, P12) in the center axis (C1) direction corresponding to the distal end portion (72, 82, 90) of the different segment conductor (40) compared to the case where the position of the insulating portion (120) is adjusted after the plurality of segment conductors (40) are disposed in the armature core (10).

### [Modifications]

The embodiment disclosed herein should be considered as exemplary and non-limiting in all respects. The scope of the present invention is defined by the scope of the claims, rather than the description of the embodiment described above, and includes all changes (modifications) that fall within the scope of the claims and the meaning and scope of equivalence.

### <First Modification>

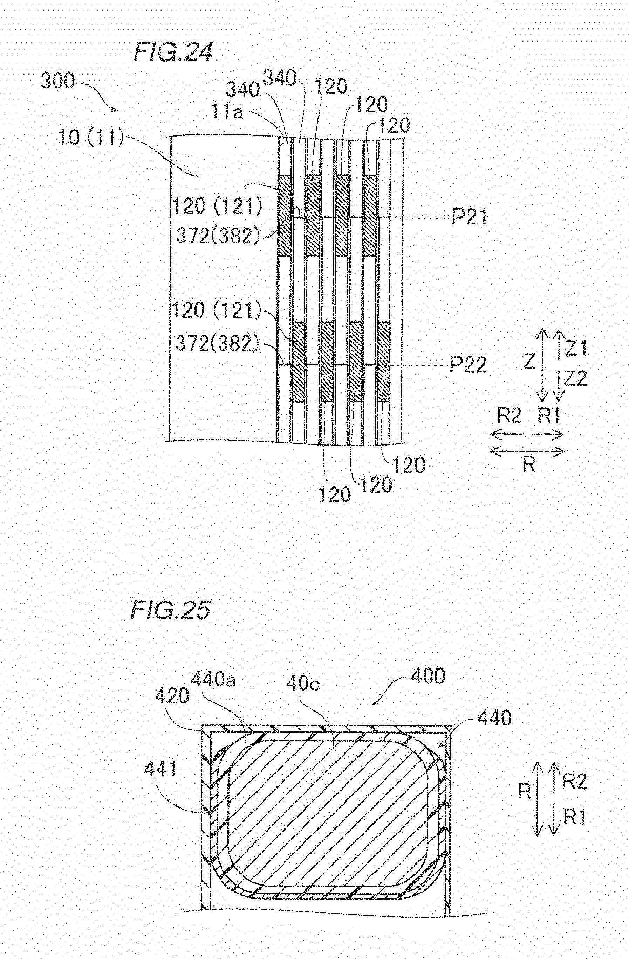

For example, in the embodiment described above, the first facing surface is configured to direct to the radially inner side, and the second facing surface is configured to direct to the radially outer side. However, the present invention is not limited thereto. For example, as in a stator 300 according to a first modification illustrated in FIG. 24, a first facing surface 372 and a second facing surface 382 may each be constituted as a flat surface that is orthogonal to the axial direction. In the first modification, unlike the embodiment described above, the first facing surface 372 and the second facing surface 382 are pressed from the axially outer side of segment conductors 340, and the first facing surface 372 and the second facing surface 382 are heated and joined to each other while being pressed against each other in the axial direction. Also in the stator 300 according to the first modification, as in the embodiment described above, a plurality of insulating portions 120 (insulating members 121) are disposed at axial positions P21 and P22 corresponding to the first facing surface 372 and the second facing surface 382 of adjacent segment conductors 340.

### <Second Modification>

In the embodiment described above, in addition, the insulating member is wound around the outer periphery of the insulating coating of the segment conductor for at least one round. However, the present invention is not limited thereto. For example, as in a stator 400 according to a second modification illustrated in FIG. 25, an insulating member 441 may be provided for only a part (the radially inner side and both sides in the circumferential direction) of the outer periphery of an insulating coating 440a of a segment conductor 440 on the radially outermost side. In this case, slot insulating paper 420 is disposed between the wall portion 11a (see FIG. 5) of the stator core and the segment conductor 440. Therefore, the insulation performance between the segment conductor 440 and the stator core 10 is secured by the slot insulating paper 420.

### <Third Modification>

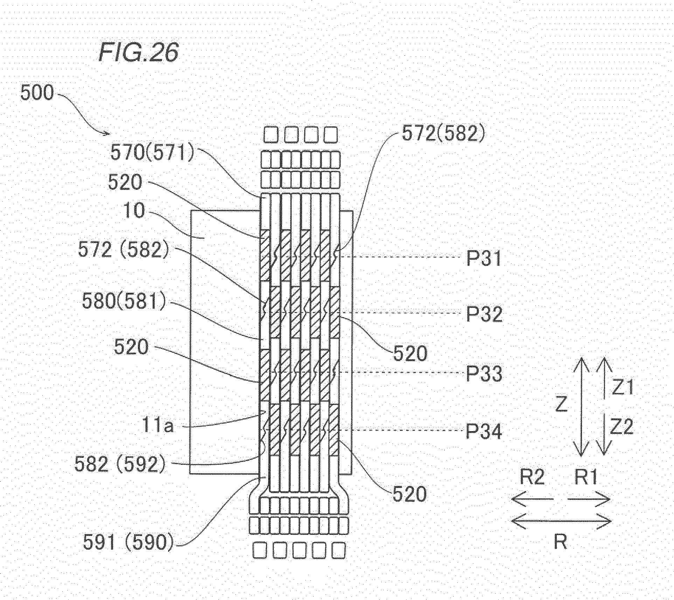

In the embodiment described above, in addition, a segment conductor disposed on one axial side with respect to the stator core and a segment conductor disposed on the other axial side with respect to the stator core are joined to each other at one location in the slot. However, the present invention is not limited thereto. For example, as in a stator 500 according to a third modification illustrated in FIG. 26, a first slot housed portion 571 (first facing surface 572) of a first segment conductor 570 and a second slot housed portion 581 (second facing surface 582) of a second segment conductor 580 are joined to each other and the second slot housed portion 581 (second facing surface 582) of the second segment conductor 580 and a third slot housed portion 591 (third facing surface 592) of a third segment conductor 590 are joined to each other (at two locations) in the slot. Also in the stator 500 according to the third modification, as in the embodiment described above, a plurality of insulating portions 520 are disposed at axial positions P31, P32, P33, and P34 corresponding to the first facing surface 572, the second facing surface 582, and the third facing surface 592 of adjacent segment conductors 540.

### <Fourth and Fifth Modifications>

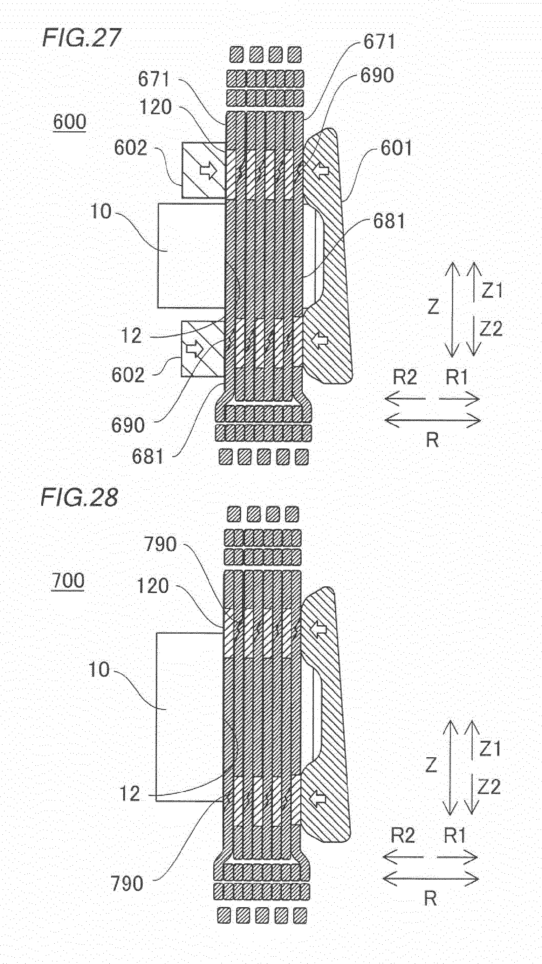

In the embodiment described above, in addition, the first slot housed portion and the second slot housed portion are joined to each other in the slot. However, the present invention is not limited thereto. For example, as in a stator 600 according to a fourth modification illustrated in FIG. 27, a first leg portion 671 of a first segment conductor 670 and a second leg portion 681 of a second segment conductor 680 may be joined to each other at a joint portion 690 on the axially outer side with respect to the slot 12. In this case, an insulating portion 620 is provided at a position adjacent to the joint portion 690 in the radial direction. The joint portion 690 is pressed in the state of being interposed between a first pressing jig 601 and a second pressing jig 602 in the radial direction to be joined. Alternatively, as in a stator 700 according to a fifth modification illustrated in FIG. 28, a part of a joint portion 790 may be disposed on the axially outer side of the slot 12, and the other part of the joint portion 790 may be disposed on the axially inner side of the slot 12 (in the slot 12).

### <Other Modifications>

In the embodiment described above, in addition, the armature according to the present invention is constituted as a stator. However, the present invention is not limited thereto. For example, the armature according to the present invention may be constituted as a rotor that has a rotor core and a coil (segment conductors).

In the embodiment described above, in addition, the opening portions are formed on the radially inner side of the stator. However, the present invention is not limited thereto. For example, the opening portions may be formed on the radially outer side of the stator.

In the embodiment described above, in addition, the coil is formed as a wave-wound coil. However, the present invention is not limited thereto. For example, the coil may be formed as a distributed wound coil or a concentrated wound coil.

In the embodiment described above, in addition, the segment conductors are formed to have a rectangular cross-sectional shape. However, the present invention is not limited thereto. That is, the segment conductors may be formed to have a cross-sectional shape (such as a circular shape and an elliptical shape) other than the rectangular shape.

In the embodiment described above, in addition, the slots are constituted as semi-open slots (with the opening width being smaller than the slot width). However, the present invention is not limited thereto. For example, the slots may be constituted as full-open slots with the opening width being equal to the slot width if the characteristics of the stator (armature) are not affected significantly. For the characteristics of the stator, semi-open slots are more preferable than full-open slots.

In the embodiment described above, in addition, the power conductor joint step and the neutral point conductor joint step are performed in the step of forming the segment conductors. However, the present invention is not limited thereto. For example, the power conductor joint step and the neutral point conductor joint step may be performed after the step of disposing the segment conductors in the slots is performed. In this case, a welding tool space is required in the vicinity of the power conductors and the neutral point conductors with the stator in the completed state. Therefore, from the viewpoint of preventing an increase in the size of the stator, the power conductor joint step and the neutral point conductor joint step are preferably performed before the step of disposing the segment conductors in the slots as in the embodiment described above.

In the embodiment described above, in addition, the coil portion is constituted (connected) through a Y connection of four parallel segment conductors (four-parallel connection). However, the present invention is not limited thereto. For example, the coil portion may be constituted through a Y connection of components other than four parallel segment conductors, or may be constituted through a Δ connection.

In the embodiment described above, in addition, a method of pressing the first other end surface or the second one end surface and a method of heating the joint material are described. However, the present invention is not limited thereto. That is, the first other end surface or the second one end surface may be pressed and the joint material may be heated by a method other than the pressing method and the heating method according to the embodiment described above.

In the embodiment described above, in addition, the insulating portion is constituted from an insulating coating and an insulating member that is separate from the insulating coating. However, the present invention is not limited thereto. For example, the insulating portion may not be provided with an insulating member, and the insulating portion may be constituted from only an insulating coating having the thickness t2.

In the embodiment described above, in addition, the thickness t3 of the insulating member is smaller than the thickness t1 of the insulating coating. However, the present invention is not limited thereto. For example, the thickness t3 of the insulating member may be equal to or more than the thickness t1 of the insulating coating if there is no problem with a reduction in the space factor of the coil in the slot.

In the embodiment described above, in addition, the insulating member is formed in a sheet shape. However, the present invention is not limited thereto. That is, the insulating member is not limited to a sheet shape. For example, the insulating member may be formed in a tube shape, or the insulating member may be constituted from a paint material, a coating agent, etc.

In the embodiment described above, in addition, the insulating member is provided on only a slot housed portion, of a pair of slot housed portions, the length of which is the longer. However, the present invention is not limited thereto. For example, the insulating member may be provided on a slot housed portion, the length of which is the shorter, or the insulating member may be provided on both a pair of slot housed portions, depending on the position of arrangement of an adjacent joint portion.

In the embodiment described above, in addition, the joint portion cover portion is formed as a part of the slot insulating paper. However, the present invention is not limited thereto. For example, the joint portion cover portion may be constituted as a member (insulating member) that is separate from the insulating portion and the slot insulating paper.

In the embodiment described above, in addition, the plurality of segment conductors are disposed in the slots after the first coil assembly and the second coil assembly in a circular ring shape are formed. However, the present invention is not limited thereto. That is, the plurality of segment conductors may be individually disposed in the slots without forming the first coil assembly and the second coil assembly in a circular ring shape.

In the embodiment described above, in addition, the insulating portion is configured to have a second insulation resistance which is higher than a first insulation resistance as the insulating portion has a second thickness that is larger than a first thickness which is the thickness of the insulating coating. However, the present invention is not limited thereto. For example, the insulating portion may be configured to have the insulation resistance r2 which is higher than the insulation resistance r1 by using an insulation material with a higher insulation resistance, per unit length (thickness), than the insulation resistance, per unit length (thickness), of the insulation material of the insulating coating. In this case, the insulating portion may be configured to have a thickness t1 which is generally the same as the thickness t1 of the insulating coating, for example. That is, an insulation material with a relatively high insulation resistance, per unit length, is used for the insulating portion (portion that is adjacent to the joint portion), and an insulation material with an ordinary insulation resistance, per unit length, is used for the other portions.

### Description of the Reference Numerals

10 STATOR CORE (ARMATURE CORE)
12 SLOT
12a OPENING PORTION
13 TOOTH
20, 420 SLOT INSULATING PAPER (SLOT INSULATING MEMBER)
21 JOINT PORTION COVER PORTION
30 COIL PORTION
30a FIRST COIL ASSEMBLY
30b SECOND COIL ASSEMBLY
40 SEGMENT CONDUCTOR
40a INSULATING COATING
40b CONDUCTOR SURFACE
42a, 42b SLOT HOUSED PORTION
43 COIL END PORTION
90, 690, 790 JOINT PORTION (ADJACENT JOINT PORTION, DISTAL END PORTION)
100, 300, 400, 500, 600, 700 STATOR (ARMATURE)
120, 520 INSULATING PORTION
121, 441 INSULATING MEMBER

## Claims

1. An armature comprising:
an armature core provided with a plurality of slots that extend in a center axis direction; and
a coil portion in which a plurality of segment conductors are joined to each other at a joint portion, wherein:
sets of the plurality of segment conductors, which are joined to each other at the joint portion, are disposed in parallel in a radial direction of the armature core; and
an insulating portion is provided on a conductor surface of one segment conductor, among the plurality of segment conductors which are disposed in parallel in the radial direction, at a position in the center axis direction corresponding to an adjacent joint portion which is the joint portion of a different segment conductor disposed adjacent to the one segment conductor in the radial direction, the insulating portion having a second insulation resistance which is higher than a first insulation resistance of an insulating coating of the different segment conductor.

2. The armature according to claim 1, wherein
the insulating portion has the second insulation resistance which is higher than the first insulation resistance as the insulating portion has a second thickness which is larger than a first thickness which is a thickness of the insulating coating of the different segment conductor.

3. The armature according to claim 2, wherein
the insulating portion includes the insulating coating which has the first thickness and an insulating member that covers the insulating coating and that has a function of insulating the segment conductor and the adjacent joint portion from each other.

4. The armature according to claim 3, wherein
a third thickness which is a thickness of the insulating member is smaller than the first thickness.

5. The armature according to claim 3 or 4, wherein:
the insulating member is formed in a sheet shape; and
the insulating member in the sheet shape is wound around an outer periphery of the insulating coating of the segment conductor for at least one round.

6. The armature according to any one of claims 1 to 5, wherein:
the segment conductor includes a pair of leg portions disposed at different circumferential positions and having different lengths along the center axis direction and a coil end portion that connects between the pair of leg portions; and
the insulating portion is provided on a leg portion, of the pair of leg portions, a length of which along the center axis direction is the longer.

7. The armature according to any one of claims 1 to 6, wherein
the insulating portion is provided at a position, in the center axis direction, at which the adjacent joint portion is present.

8. The armature according to any one of claims 1 to 7, wherein
the joint portion of the one segment conductor and the joint portion of the different segment conductor are not provided adjacent to each other in the radial direction, but provided at different positions in the center axis direction.

9. The armature according to claim 8, wherein
the joint portions of the plurality of segment conductors which are disposed in parallel in the radial direction are disposed alternately in the radial direction at a position on one side in the center axis direction and a position on the other side in the center axis direction.

10. The armature according to any one of claims 1 to 9, wherein
a length of the insulating portion in the center axis direction is equal to or more than an insulation creepage distance along the center axis direction from the adjacent joint portion, and less than a length of the slots in the center axis direction.

11. The armature according to any one of claims 1 to 10, wherein:
the armature core includes a plurality of teeth formed on both sides, in a circumferential direction, of the slots;
the armature further includes a slot insulating member disposed between the teeth and the segment conductors;
the slots each have an opening portion that opens on one side in the radial direction; and
the slot insulating member includes a joint portion cover portion that covers one side, in the radial direction, of the joint portion of a segment conductor disposed closest to the opening portion, among the plurality of segment conductors which are disposed in parallel.

12. A method of manufacturing an armature that includes an armature core provided with a plurality of slots that extend in a center axis direction and a coil portion in which respective distal end portions of a plurality of segment conductors are joined to each other, the method comprising:
a step of providing an insulating portion, which has a second insulation resistance which is higher than a first insulation resistance of an insulating coating on the distal end portions, on a conductor surface of a portion of the segment conductors that is different from the distal end portions;
a step of disposing the plurality of segment conductors in the armature core, after the step of providing the insulating portion, such that the plurality of segment conductors are arranged in parallel in a radial direction of the armature core and the insulating portion of one segment conductor, among the plurality of segment conductors which are disposed in parallel in the radial direction, is positioned at a position in the center axis direction corresponding to the distal end portion of a different segment conductor disposed adjacent to the one segment conductor in the radial direction; and
a step of joining the respective distal end portions of the plurality of segment conductors, which face each other in the center axis direction, to each other after the step of disposing the plurality of segment conductors.

13. The method of manufacturing an armature according to claim 12, wherein
the step of providing the insulating portion is a step of providing the insulating portion, which has the second insulation resistance which is higher than the first insulation resistance as the insulating portion has a second thickness which is larger than a first thickness which is a thickness of the insulating coating of the distal end portions, on the conductor surface of the portion of the segment conductors which is different from the distal end portions.

14. The method of manufacturing an armature according to claim 12 or 13, wherein:
the segment conductor includes a pair of leg portions disposed at different circumferential positions and having different lengths along the center axis direction and a coil end portion that connects between the pair of leg portions; and
the step of providing the insulating portion is a step of providing the insulating portion by attaching an insulating member to a portion of a leg portion, of the pair of leg portions, a length of which along the center axis direction is the longer, the portion being different from the distal end portion; and
the step of joining the distal end portions to each other is a step of joining the distal end portions to each other at a position adjacent to the insulating portion in the radial direction.

15. The method of manufacturing an armature according to any one of claims 12 to 14, further comprising:
a step of forming an annular coil assembly composed of the plurality of segment conductors, after the step of providing the insulating portion and before the step of disposing the plurality of segment conductors, such that the insulating portion of the one segment conductor is positioned at a position adjacent, in the radial direction, to the distal end portion of the different segment conductor disposed adjacent to the one segment conductor in the radial direction, wherein
the step of disposing the plurality of segment conductors is a step of disposing the plurality of segment conductors in the armature core by moving the annular coil assembly in the center axis direction with respect to the armature core so that the annular coil assembly is disposed in the armature core such that the plurality of segment conductors are arranged in parallel in the radial direction of the armature core and that the insulating portion of the one segment conductor is positioned at a position in the center axis direction corresponding to the distal end portion of the different segment conductor.
